# EUROPEAN PATENT SPECIFICATION

(11) **EP 1 064 073 B1**
(45) Date of publication and mention of the grant of the patent: **21.06.2006**
(21) Application number: 99905147.7
(22) Date of filing: 15.02.1999
(51) Int. Cl.: B01D 39/00, B01D 67/00, B01D 69/12

(54) **SELECTIVE MEMBRANE AND PROCESS FOR ITS PREPARATION**
SELEKTIVE MEMBRAN UND VERFAHREN ZU IHRER HERSTELLUNG
MEMBRANE SELECTIVE ET PROCEDE DE PREPARATION DE CELLE-CI

(30) Priority: 16.02.1998 IL 12332698
(43) Date of publication of application: 03.01.2001
(73) Proprietor: B.P.T. Bio Pure Technology Ltd., Rehovot 76705 (IL)
(72) Inventor: PERRY, Mordechai, 49282 Petach Tikva (IL)
(74) Representative: Wakerley, Helen Rachael
(86) International application number: PCT/IL1999/000092
(87) International publication number: WO 1999/040996

(56) References cited:
- EP-A- 0 242 208
- US-A- 4 778 596
- US-A- 5 240 615
- US-A- 5 286 382
- US-A- 5 897 955

## Description

### FIELD OF THE INVENTION

The present invention relates to a process for making selective and/or catalytic membranes.

### BACKGROUND OF THE INVENTION

The water, chemical, food and pharmaceutical industries have to develop processes to lower raw material and energy consumption, and minimize and recover waste materials, water and solvents. Membrane separations and membrane based catalysts are becoming increasingly important in this effort. For many applications, however, membranes are still not selective and/or stable enough. The present invention seeks *inter alia* to remedy these deficiencies in the existing art.

As described in the state of art section in U. S. Patent No. 4,659,474 (Perry et al.), the application of polymers to supports under pressure is used in the area of dynamic membranes. For example, in dynamic membrane formation a thin barrier is deposited under pressure an a support from a dilute solution of polymer (D.G. Thomas, in Reverse Osmosis and Synthetic Membranes, Ed. S. Sourirajan, pp. 295-312, NCRR Publications 1977). In these and other examples of dynamic membrane formation the coating is usually cross-linked by ionic bonds which is not stable and the coating itself is not permanent and must be continually reformed by the addition of new polymer and cross-linker. Often it is supplied in the feed solution being treated. In other cases it may be applied before use. After use it is removed and reformed with a fresh solution prior to use.

In U.S. Patent No. 3,577,339 (Baird et al.), zirconium oxide membranes on stainless steel substrates are formed from a solution containing hydrous zirconium oxide. In U.S. Patent No. 3,413.219 (Kraus et al.), the membrane is formed by contacting a porous support with an aqueous solution containing colloidal parucles of a polyvalent metal, capable of forming the hydrous metal, oxides. Another approach is to use a mixture of polyvalent salts, especially zirconium salts, with an organic polymer such as polyacrylic acid being added to the solution after the salt solution has permeated over and through the membrane. Thus, there is formed a dynamic membrane on a stainless steel support. Such membranes have limited stability because they are not cross-linked with covalent bonds.

In Separation and Purification Methods, 7(2), 183-220 (1978), the author (G. Tanny) describes three types of dynamic membranes. In the first two types the dynamic membrane is formed on the surface. In the third type polymers are fitted into the pores and this requires that "the fit between pore and molecule must be very close". Examples of polymers used to form the dynamic membrane on the support are quaternized 2-polyvinylpyridine, polyacrylic acid and block copolymers of polyacrylic acid and polystyrene. An example of a support is asymmetric cellulose acetate (CA). Supports with pores which are too large or too small do not form good dynamic membranes of this class. The stability of the dynamic membranes is better for the third class than for the other two classes. But even for the third class, they last only for several hundred hours, after which the membranes must be reapplied. No covalent cross-linking is applied to stabilize the plugging materials. For example, vinyl acetate-crotonic acid formed on CA and stabilized with zinc chloride has a stable performance for only 26 days (G.L. Dalton, et al. Desalination, 24, 235, (1978), whereas ZrO₂ -polyacrylate membranes are stable for several hundred hours before requiring regeneration.

In addition, dynamic membranes are sensitive to pH and changes in salt concentrations. The higher the salt concentration, the lower the rejections. Acidic streams often have lower rejections than basic streams and these effects reflect the swelling of the gel-like selective layer of dynamic membranes. By contrast, in the present membranes, the selective layer hardly swells, and such effects are minimized.

Hydrophobic microfiltration and ultrafiltration membranes can be made hydrophilic by various sate of art process which coat the external and pore surfaces of hydrophobic membranes without filling the pores and changing selectivity. In effect methods are known to coat the walls of pores in membranes, in order to impart hydrophilicity or to enable the pores to be ionically charged without change on pore size or loss of the porosity or flux characteristics of the support. The pores are coated with polymers or low molecular weight components which may or may not be cross-linked. MF or open UF membranes are utilized. Thus, in U.S, Patent No. 4,944,879 (July 31, 1990 to M. J. Steuck, Millipore Corp.), a porous support is coated on the surface and on the pores surface with a monomer, crosslinking agent, the components being polymerized with an electron beam. This hydrophilic porous composite of substrate and pore coating is said to be an improvement over a previous Millipore patent (US 4,518,533) for a hydrophilic composite in which a monomer/crosslinking monomer is crosslinked with a free radical initiator. While the intention is that little or no blockage of the initial pores occurs, it appears however that this approach does result in some blockage, lower fluxes, and gives too high leachables of residual material after the membrane has been formed.

In another patent to Millipore (US 5,286,382, Feb 15, 1994), hydrophobic polymeric composites are made from a porous substrate by having its entire surface including the inner surface of the membrane modified with a crosslinked polymer from an ethylenically unsaturated monomer containing a fluoroalkyl group, which results in hydrophobic and oleophobic surfaces. The polymeric surface is formed by coating the porous membrane substrate with a solution of the monomer, a cross-linking agent and a polymerization initiator if necessary, and polymerizing by use of a suitable energy source such as electromagnetic, thermal and ionizing radiation, the substrate being sandwiched between two radiation transparent sheets, and radiation applied. The composite produced has essentially the same porous configuration, porosity and flow as the membrane substrate.

In all three pore modification patents, and others (US 3,253,057, 4,151,225, 4,278,777 and 4,311,573, 4,954,256, EP application 86307259.1, PCT/US90/04058 and US 5,037,457) the selectivity of the substrate is not changed and the modification does not introduce a selective barrier. Furthermore, the three patents noted are concerned with MF and open UF membranes, and not with tight UF, RO, NF, ED, pervaporation, gas separation or catalytic membranes.

In U.S, Patent No. 4,711,793 (Ostreicher et al., Dec. 8, 1987), assigned to Cuno, cationically charged hydrophilic microporous membranes are made for microfiltration. The process involves a material containing cationic charges to all the membrane microstructures (external and internal pores) without pore size reduction or blockage. The membranes are symmetrical, isotopic, hydrophilic organic polymeric MF membranes, preferably based on nylon. The charge modifying material applied to the membrane is a polymer having tertiary or quaternary ammonium groups and epoxide groups which bind chemically to the microstructure of the support. The groups on the microstructure of the support may be amino, carboxylic and hydroxyl. In fact the support may for example be first treated with caustic to increase the number of amino and carboxyl groups, and the epoxy containing polymer is applied, e.g. by dipping, spraying or by contacting a wick or a roll along the surface of the microporous membrane. After dipping in the solution, the membrane is drained for a sufficient period of time to remove most of the water and chemicals not attached to the surfaces of the membrane. The membrane is then dried and cured at elevated temperature. The final membrane has retained internal pore geometry, with cationic charges on the pore.

In another patent to Cuno (U.S. 4,737,291 Apr. 12, 1988) the objective is the same as in U.S, Patent No. 4,711,793 - a cationically charged membrane on all pore surfaces of an MF membrane (preferably nylon) without changing pore size or blockage, retaining the original MF properties with the addition of charge. In this patent, the process for minimal flush out time involves first contacting the membrane with an aqueous solution of a polyamine (e.g. tetraethylene pentamine) and then subsequently an aqueous solution of a cross-linking agent (1,4 butanediol diglycidyl ether). For maximum charge modification, a mixture of the polyamine and the cross-linker may be applied (col. 6, lines 55-59). The solutions are applied by dipping, spraying or contacting a wick or roll along the surface of the microporous membrane.

In U.S. Patent No. 5,282,971 (P. J. Degen, J. Lee, Pall Corp., Feb. 1, 1997), polyvinylidene fluoride MF membranes are positively charged on all its external and internal surfaces, by exposing the membrane to ionizing radiation (gamma and electron radiation), which produces radicals on the membrane, and then contacting it with a preferably aqueous solution which contains vinyl monomers, at least some of which are cationically charged (most preferably using diallyldimethyl ammonium chloride), and non-ionic but polar monomers (e.g., HEMA). The contacting may be effected in many different ways, including forced flow through the membrane by pressure. After irradiation and polymerization, the membrane is washed to remove polymer not bound to the membrane (washed with water for 5 hrs. at 0.5 gpm/10 sq ft). After washing, drying up to 100°C for 14 hrs. gave good results. The polymer should be as thin as possible while still overcoming the inherent negative charge of the original membrane. After this modification, the product must still be a MF membrane.

It is also known (e.g. in the patents mentioned above on dynamic membranes) to fill the membrane pores and change completely the nature of membrane selectivity. For example, open porous membranes may be made into RO membranes by dynamically forming a membrane on the surface or in the pores of the support. These membranes have a short life, in absence of covalent cross-linking, and were difficult to make in the case of pore penetration because the pores and the filing polymers had to be carefully matched; the products are gel like structures which are very sensitive to changes in pH and solute concentrations.

In another example, pressure filtration was used to deposit polyamines through an activated collodion membrane (E. Hoffer and O. Kedem, Ind. Eng. Chem. Process Des. Develop. Vol. 11, No.2, 1992) to bind the polyamine to the walls. The polyamine was not cross-linked inside, and the properties of the membrane were that of the polymer attached to the walls and not a coating on the surface or filled pores. In addition, because the polymer could be washed out, the properties of the membrane were unstable.

In J. Membrane Science 1995, 108(102), 37 to 56 (Mika A.M., et al.) "a new class of polyelectrolyte-filled microfiltration membranes with environmentally controlled porosity" is described. The membrane is made up of a microfiltration substrate (polyethylene and polypropylene microfiltration membranes) and a pore filling electrolyte produced by UV induced grafting of 4-vinylpyridine onto polyethylene and polypropylene microfiltration membranes. The rigid structure of the polyolefinic structure stabilizes the extremely flexible and swellable polyelectrolyte gel, giving stable membranes with very high charge. The selectivity/flux characteristics of these membranes are very sensitive to pH, and salt concentration in the feed, with rejection decreasing strongly with increasing concentration. They also show a higher rejection of multivalent co-ions than for multivalent counter ions compared, to monovalent ions.

U.S. Patent No. 3,944,485 (1976), 4,045,352 (1977) and 4,014, 797 (1997) (inventors: Rembaum or Rembaum et al.) describe hollow fibers with cross-linked ion exchange polymers embedded throughout the entire thickness of the fiber wall. The impregnated fibers are made by permeating polymerizable liquid monomers through the walls of the fiber and allowing the fibers to stand with the polymerizable monomers both in the lumen and on the outside walls. Polymerization takes hours or days, and does not occur significantly during the stage of permeation. In addition, the material that polymerizes inside the lumen has to be pressed out after the polymerization process is complete. The resultant membranes are used in dialysis for water treatment, but would not be suitable for. pressure driven processes such as RO, NF and UF, which require a thin selective layer, the thickness of Rembaum's membranes being governed by the thickness of the fiber wall which is typically between 20 to 300 microns.

U.S. Patent No. 4,214,020 (Ward et al., 1980) describes a method for coating the exteriors of a bundle of hollow fibers, for use in fluid separations, which in examples are gas separations, the exemplary coating polymers being silicones. The described process involves immersing the bundle of fibers in a coating liquid containing the coating polymer and solvent, and then applying a pressure drop from the exterior to the interior of the fibers which results in the formation of an exterior coating. The deposited material may directly form the coating when deposited or may be subsequently subjected to cross-linking. In most cases, the inventors specify that the deposited material be of a larger size than the pores so that the coating is only on the exterior. They mention however that in the case when the material of the hollow fiber substantially influences fluid separation, then the deposited material may be small enough to enter the pores (instead of merely bridging them), so that non-selective porous pathways are blocked, and the material of the hollow fiber itself controls selectivity. In all cases, cross-linking or subsequent reaction to increase molecular weight such as polymerization, when it is required, occurs after the deposition in a subsequent curing or/and drying stage. In this method, the materials must be carefully chosen, because too small sizes will fill up the whole pore structure to give membranes with very low flux. Since most membranes contain a variety of pore sizes it is impossible in practice to choose the right combination that gives both high flux and high selectivity. In this patent, the preferred concentration of coating material is 0.5 to 10% weight percent of the coating liquid.

In US 4,230,463 (to Henis et al.), membranes for gas separation are described, where the intrinsic gas selectivity is due to the material of the thin upper layer of an asymmetric membrane, wherein coating the surface and filling existing pores and imperfections is effected with a highly permeable material. The thickness of the material in the pores is relatively thick and its permeability is substantially lower than the open pores and imperfections such that the overall selectivity is now controlled by the material of the original membrane. It is noted that Henis does not coat under conditions where cross-linking is occurring during the application of the reactants or coating material.

In U.S. Patent No. 4,239,714 to Sparks et al. (1980) a method of modifying pore size distribution of a microporous membrane is described. The process is complex and involves evaporation of a volatile liquid in order to expose the surface of large pores into which a blocking molecule can fit. The pore blocking molecule stays at the entrance of the large pores. After being applied, the pore blocking molecules are cross-linked by the application of a crosslinker. This method does not change the selectivity of the membrane to another class but simply sharpens the cut-off, and it does not cover or fill all the pores.

In U.S. Patent No. 4,163,714 to Gregor (Aug 7, 1979), ligands are attached to the pore walls of a membrane which have been derivatized with reactive groups which will react with the ligands-all the reaction steps may occur under pressure. The pore diameter of these membranes are such that they allow a high concentration of ligands on their inner surface while still providing access to the solute molecules whose separation and purification is the objective. Through this membrane having a high density of bound ligands a mixture is passed which contains certain species which can form complexes with the ligands. Further, the excess undesired compounds of the mixture can readily be washed out of the membrane under pressure and then the complex separated and the desired substance displaced in a pure and concentrated state. The described method does not modify the pores of the membrane to give a different class of selectivity.

In U.S. Patent No. 4,778,596 to Linder et al. (Oct. 18, 1988) a semipermeable membrane is formed by first coating by immersion all external and internal surfaces with a coating polymer and cross-linking this coating polymer by immersion in another solution containing a cross-linker. The cross-linker diffuses into the coating and cross-links both external and internal coatings. There is thus a gradient of cross-links from the outside surfaces to inside the membrane.

Composite membranes are commonly formed by the interfacial crosslinking of hydrophilic polymer which has been coated onto the support from an aqueous solution and where the interfacial crosslinking occurs by contacting this coating with a non-aqueous solution containing a crosslinker. In some cases, as claimed in U.S. Patent No. 4,360,434 to Kawaguchi et al. (Nov. 23, 1982) a second crosslinker which is preferably water soluble is added to the polymer solution, which effects crosslinking of the bulk of the coating in a curing stage after the interfacial cross-linker has been applied, and gives the membrane more durability. Reagents that cross-link the polymer before the curing step are excluded from being added to the polymer solution. In addition the function of the added cross-linker to the coating solution is to add durability while the function of the interfacial cross-linker is to give the coating a thin semipermeable cross-linked layer, which controls the selectivity of the membrane.

In U.S. Patent No. 4,039,440 to Cadotte (Aug. 2, 1997) cross-linking reagents were dissolved in a polymer solution, coated on a support and then cured. The results were considerably inferior to membranes made by interfacial crosslinking. This comparative set of experiments showed the need, according to the inventor, to have interfacial crosslinking as a means for obtaining an extremely thin but highly rejecting barrier.

In U.S. Patent No. 4,704,324 to Davis (Nov. 3, 1987) composite membranes are formed by placing a thin layer of solution containing reactive cationic compound with a compound containing a nucleophilic moiety. The reaction product contains covalent bonds formed via charge elimination reactions and gives a crosslinked selective layer on upper of a porous support. An important property of the coating formulation is the ability to form thin continuous films. The coating is applied by conventional techniques such as adsorption, dipping, casting, spraying, wiping, rolling or filtration of the coating solution through the substrate. The inventors state that penetration of the coating solution into the pores is not preferred. The excess material is desirably removed by draining or drawing a smooth instrument. Where necessary, reactive compounds which are not stable (and in effect react) in solution, can be applied in sequential coats. After coating, reaction is initiated by drying and heating steps.

In EP 0 395 184 A1 to Burggraaf et al., the upper layer of a ceramic porous asymmetric ultrafiltration membrane is preferentially modified with an inorganic precipitant. The process for achieving this is to impregnate the upper layer using the greater volume of the more open pored lower layer of the support (called here the carrier) as impregnated liquid reservoir. Concentration of the impregnation liquid in the upper layer, and precipitation of material in the pores of the upper layer is effected via a chemical reaction between components in the impregnation liquid. The concentration of the liquid into the upper layer occurs when the membrane is dried under controlled conditions. Due to the smaller pores in the ultrafiltration upper layer, all the liquid will be concentrated in the upper layer by capillary forces during the drying process. The reaction to bring about precipitation occurs upon heating. The drying and heating steps should be separate, since if the precipitation reaction upon heating is too fast, there is not enough time for the liquid to be carried into the upper layer when drying. However, if the precipitation reaction is slow enough and the concentration effect fast enough, then the drying and the heating step may be carried out simultaneously so that the liquid anyway is first concentrated into the upper layer and then precipitated as heating continues. If the precipitation reaction is too fast then heating and drying cannot be carried out at the same time. It will be appreciated that when carrying out the heating and drying (concentrating) steps simultaneously, it is necessary to use the correct combination of capillary force generation to pull liquid into the small pores of the upper layer before the reaction will occur in all the layers. This is a very restrictive requirement, requiring careful control of material parameters and may result in imperfections in the distribution of material in the upper pore surface and poor reproducibility for the simultaneous process. The support as well as the choice of reactants is also limited because the lower layer of the support must be sufficiently large to contain enough liquid as the reservoir and the pore size distribution profile must be sufficient to generate capillary forces to concentrate the liquid in the upper layer upon drying.

In GB 1,527,360 to R. Bloch, a microfiltration membrane is immersed in a solution of enzyme and this is immersed in a solution of crosslinker such as glutaraldehyde, so as to impart enzymatic activity to the membrane, which, however, still remains a MF membrane.

There are, moreover, numerous patents or published patent applications, in which inorganic, ceramic or zeolite particles are embedded within the pores of a support. Thus e.g. In European application 0 180 200, zeolite particles consisting of a layered compound or a crystalline-latticed material are placed inside the pores of a support which may be metallic, otherwise inorganic, or polymeric. Such particles may be inserted by pressure, absorption, ultrasonic treatment or a combination of such methods. The resulting composites are used as molecular sieves or/and for their catalytic activity. Another class of asymmetric metallic membranes is constituted by use of a porous metal support where the pores on one surface are partially filled with inorganic particles to form UF membranes or tight MF membranes. For example, porous stainless steel tubes filled with sintered metal oxides, for example of 0.2 to 1.0 micron diameter, e.g. TiO₂ particles, in the pores of one surface (see European Application No. 0381812 A1 [8/9/89] where such particles are sintered together by heating). These membranes are used as a support for dynamic membranes, or "as is" for MF/UF filtration.

The above state of art is limited in its ability to provide inexpensive, highly uniform thin selective and stable RO, NF and tight UF membranes or catalytic barriers having minimum imperfections within the upper pore region of asymmetric membranes. Thus membranes having practical application in drinking water purification, desalination, waste water treatment and water and product recovery in numerous industries which need inexpensive, selective and stable membranes, have not been heretofore readily available, but are made available by the present invention.

My prior patent application IL 121632 relates to a process for repairing imperfections in ready-made membranes. It does not relate, as does the present patent application, to creating the selective barrier in membrane pores.

US Patent No. 5,240,615 discloses a microporous composite membrane which comprises at least two layers laminated in series wherein one of the layers is a porous support layer and the adjacent layer comprises at least 90% polyvinylidene difluoride, the composite membrane further comprising a hydrophilic agent within the pores of the polyvinylidene difluoride layer.

### OBJECTS OF THE INVENTION

One of the objects of the present invention is a process for preparing a selective composite membrane which is versatile in the sense that a range of different UF, NF, RO, ED membranes may be conveniently formed from a readily available UF base membrane, by varying parameters of the process such as the composition applied to the base membrane and the reaction conditions. Another object of the invention is a process for preparing a selective composite membrane, which seals simultaneously imperfections in the base membrane. A further object of the invention is a process for preparing a selective composite membrane in which reactants forming the selective barrier are present in an essentially homogeneous single liquid phase. Yet another object of the invention is a process for preparing a selective composite membrane in which reactants forming the selective barrier are present in an essentially homogeneous single liquid phase, in such dilution that the reactants do not interact significantly in the solution, but rather in pores of the base membrane. Still another object of the invention is a process for preparing a selective composite membrane under conditions which allow control over selectivity of the product.

Yet another object of the invention is a process for preparing a selective composite membrane under conditions which allow control over stability of the product.

A further object of the invention is a process for preparing a selective composite membrane in which ingredients, which are regarded as prohibitively expensive for use in conventional selective composite membranes, can be utilized economically.

A still further object of the invention is a process for preparing a selective composite membrane under conditions which allow catalytic properties to be imparted to the product. Still another object of the invention is a selective composite membrane having the properties set forth in the last several paragraphs.

Other objects of the invention will appear from the description which follows.

### SUMMARY OF THE INVENTION

The above and other objects are achieved in accordance with the present invention, which relates to a process for making a selective composite membrane. A composite membrane made according to the process of the present invention may be unsupported, or it may be supported on a substrate. The composite membrane utilizes an asymmetric base membrane, which is defined as being characterized by at least components (a) and (c) of the following components (a), (b) and (c): (a) a thin upper layer with relatively smaller pores (b) an intermediate layer situated between layers (a) and (c) and having pore sizes intermediate those of layers (a) and (c); (c) a lower layer, thicker than layer (a), with relatively larger pores than in layer (a), In other words, the asymmetric base membrane may be regarded as comprising only layers (a) and (c), or, alternatively, it may comprise all three layers, (a), (b) and (c).

A composite membrane made according to the process of the present invention may comprise a base asymmetric membrane, in which pores of the upper layer containing relatively smaller pores, have been synthetically impregnated with an ordered macromolecular structure, by forcing a solution containing all reactants, in which no significant prior reaction has occurred, into said pores accompanied by applying superatmospheric pressure to the surface of said layer or a vacuum to the surface of the lower layer containing relatively larger pores, or both said superatmospheric pressure and said vacuum, said reactants being at least one member selected from the group consisting of polymers, oligomers, monomers, and/or low molecular weight polyfunctional reagents, chemical interaction of said reactants having been initiated in pores of said upper layer as microreactiort vessels and wherein both said base asymmetric membrane and said ordered macromolecular structure are independently selected from organic materials, inorganic materials and mixtures thereof. This ordered structure and the base membrane may be, independently, organic, inorganic, or partly organic and partly inorganic. The term "inorganic" in this context includes, but is not limited to, "ceramic". Preferably, a major proportion of pores of the upper layer have been thus impregnated.

The present invention provides a process for preparing a selective composite membrane, which comprises synthetically impregnating at least some pores, of the upper layer (a) containing the relatively smaller pores, in an asymmetric base membrane, with a filling material comprising an ordered macromolecular structure, the synthetic impregnation comprising forcing a solution containing all reactants into said pores of layer (a) accompanied by applying superatmospheric pressure to the surface of layer (a) or a vacuum to the surface of layer (c), or both said superatmospheric pressure and said vacuum, said reactants being at least one member selected from the group consisting of polymers, oligomers, monomers, and/or low molecular weight polyfunctional reagents, wherein the concentration of said reactants in said solution and the pressure difference between the surface of layer (a) and the surface of layer (c) being such that, while no significant reaction takes place in the solution prior to said forcing, chemical interaction of said reactants is initiated in pores of layer (a) as microreaction vessels and progresses within said pores of layer (a), said chemical interaction of said reactants being quenched at any desired stage, and wherein both said base asymmetric membrane and said ordered macromolecular structure are independently selected from organic materials, inorganic materials and mixtures thereof. The process may be characterized additionally by at least one of the following features: (i) a subsequent heating step is effected to complete the formation of the ordered macromolecular structure: (ii) at least one reactant is initially absorbed onto the walls of the pores in the upper layer, (iii) the reactants are applied together with at least one further ingredient selected from inert polymers and submicronic particles, to which additional ingredient pores of the upper layer are permeable.

The interaction of reactants forming the ordered macromolecular structure in pores of the upper layer may be categorized by at least one of the following modes of reaction (α), (β) and (γ) namely: (α) crosslinking a polymer (which mat be, but is not limited to, a high molecular weight polymer an oligomer or a dendrimer, or a mixture of any of these), whereby there is preferably formed a three-dimensional structure; (β) polymerizing a monomer, (γ) self-reacting an entity to give a macromolecular polymeric product. The term "self-reacting" includes, but is hot limited to, self-condensation. A crosslinked macromolecular structure is presently preferred, because these are believed to confer superior selectivity and stability on the composite membrane,

It will be apparent that the asymmetric base membrane must have a significant initial permeability, to the reactants which interact to form the ordered macromolecular structure. "Significant permeability" in respect of the asymmetric base membrane means >2%, preferably >5%, desirably > 10%, particularly >15%, e.g. in the region of 20% or more.

Although it is an essential feature of the invention that pores be impregnated by initiating reaction therein, the invention does not preclude continuing the reaction with formation of a thin coating of ordered macromolecular structure on the surface of the asymmetric membrane which is essentially contiguous with and structurally integral with the structure in pores of the upper layer. Thus, the above expression "the reaction forming the ordered macromolecular structure being quenched at any desired stage" includes continuing reaction until the thin coating having a desired thickness has been formed.

It will be appreciated that the reactants, which are utilized in dilute solution, will be forced through the pores under superatmospheric pressure, and will react initially in at least some of the relatively small pores in the upper layer (particularly in the narrowest portions thereof) as they become concentrated therein by virtue of what is essentially a selection effect, the larger reactant molecules being retained while the generally smaller solvent molecules pass through. Especially where the reactant molecules are relatively small, it may be desirable to effect the process in presence of an inert polymer, as stated in (iii), above, which will have the effect of constricting the pore space and therefore aiding concentration and thus interaction of the reactants therein. For a similar reason, any imperfections in the membrane which take the form of tiny cracks or crevices will become automatically sealed in the course of effecting the process of the invention.

The composite membrane made according to the process of the invention is not limited to a particular configuration. It may take the form of, e.g., flat sheets, tubes or tubelets, hollow fibers, or it may be spiral wound.

For many practical purposes, it is preferred that the composite membrane made according to the process of the invention is stable in the presence of at least one of acids, bases, organic solvents and oxidants, provided that where the membrane is supported on a substrate, this has at least the same such stability characteristics as the membrane.

The composite membrane made according to the process of the invention may have the characteristics e.g. of an RO, NF, pervaporation, diffusion separation cr gas separation membrane, it may be, e.g., a backwashable NF membrane. It may possess catalytic properties, e.g. enzyme catalytic properties, or may possess catalytic properties by virtue of the presence of at least one ingredient selected from metals, their ions or ligands thereof:

The composite membrane made according to the process of the invention may contain, in the ordered macromolecular structure, fixed ionic, polar, hydrophobic (e.g. F-containing), and/or hydrophilic groups, and it may in turn have the characteristics of an RO, NF or ED membrane, or it may be adapted for: dialysis, or possess catalytic properties.

From what has been stated above, it will be apparent that, in the process of the invention, the reactants penetrate into the pores of an asymmetric membrane and become sufficiently concentrated in the pores to react therein, whereas by contrast, no significant reaction takes place initially in the solution or on the surface of the membrane. Reaction at the surface, if it takes place at all, will be an extension of the reaction which has already taken place in the pores. The asymmetric base membrane will necessarily have a molecular weight cutoff which allows passage of the reactants into the pores, and under the applied conditions, e.g. of pressure temperature, pH and ionic strength, with the result that the concentration of the reactants increases within the pores in turn results in formation of the ordered macromolecular structure involving chemical reaction with covalent bond formation; the term "covalent bond formation" includes, *inter alia,* formation of coordinate covalent bonds and conjugated bonds. This reaction occurs primarily and selectively within the upper smallest pore volumes of the asymmetric membrane, and not significantly in the solution or within the larger pores of the underlying structure of the support. A barrier comprising the ordered macromolecular structure is thus built up from the interior of these pores and towards the upper exterior surface of the membrane. The thickness and density of the materials in the pores is a function of the concentration and molecular weight of the reactants, the reaction conditions, the size of the pores in the upper layer of the asymmetric base membranes being modified, and the duration of the application of the pressure.

The phrase "ordered macromolecular structure", in the present specification and claims, emphasize a distinctive feature of the present invention, in that the macromolecular structure is synthesized, i.e. built-up, from smaller moieties, by reaction with formation of covalent bonds, within pores of the membrane, whereby as a result, pores become impregnated with the macromolecular structure. In this connection, the above-stated categorization (α), (β) and (γ), of the interaction of reactants forming the ordered molecular structure, may be noted.

### DETAILED DESCRIPTION OF THE INVENTION

In one embodiment, at least two components of dilute concentration, having a low reaction rate in the solution under the conditions in which it is used, of concentration, temperature, pH, and solvent, are pressed under pressure onto the surface, and into the upper pore layer of an asymmetric membrane, and where at least one component is concentrated inside the pores or on the surface, and this concentration effect initiates a crosslinking reaction which forms either a highly crosslinked film or a lightly crosslinked film selective barrier which grows primarily from inside the upper layer pores of the asymmetric support, as long as the pressure is applied. The extent of pore filling and surface coating being controlled by the time of application of pressure on the support. The pH, temp., conc. of the different components, and the magnitude and duration of applying the pressure force are such that a selective stable barrier is formed. Optionally a subsequent heating step under various conditions may be carried out to complete the crosslinking of lightly crosslinked films. Other subsequent steps, such as chemical modification to introduce charges, polarity or hydrophilicity, and various treatments to improve flux and or rejection are also desirable as will be described below.

A variation of the above is a solution containing at least one component which can condense or react with itself at a sufficiently high rate when concentrated in the pores, but reacts slowly in the solution. An additional variation is a mixture of self condensing components and other components that react with the first self condensing components or with at least a third component.

The modes of concentration may be: 1) by frictional retention with the wall of the pores of at least one component which further retains itself and other components. 2) Physical retention without complete blockage of one of the components in the pore and which can react with other same or different components permeating into the pore. 3) Adsorption and/or reaction of at least one component onto the material of the pore and subsequent adsorption and reaction of the other components onto this adsorbed layer. 4) A combination of all three. In a typical state of art ultrafiltration asymmetric support which may be used in this invention there is a variation of pore sizes, such that more than one of the above concentration and retention mechanisms may apply.

Upon concentration all types of organic and inorganic reactions may take place. The organic reaction may be based on oxidation/reduction, electrophilic, nucleophilic, substitution elimination, free radical and pericyclic (See March "Advanced Inorganic Chemistry " for a list of reactions). The type of inorganic reaction which may take place are condensation, elimination etc. (Cotton and Wilkenson for a list of reactions).

### The Support

The asymmetric base membrane is characterized as having a thin upper layer of small pores, e.g. of 0.5 to 100 nanometers pore size, resting on an integrally attached substrate with larger pores. Often these larger pores increase in size from just under the relatively dense upper layer to the lower. In many cases and in one preferred case the membrane contains an intermediate layer of intermediate pore size between that of the upper layer and the lower pores sponge type layer. Typically but not restricted to, the upper layer may vary in thickness from a fraction of a micron to 5 microns (preferably 0.2 to 2 microns). The intermediate layer when it exists may vary from one micron to 10 microns and the lower sponge like layer may range from 20 to 500 to 1000 microns (preferably 50 to 200 microns). The morphological structures of the membrane may vary. Non-limiting examples are the lower sponge layers having a distribution of pores or having finger like structures which may go through the whole of the lower layer or partially through the lower layer, or penetrate through the intermediate layer or even to the thin upper layer. Sometimes the membranes contain a thin dense layer on both the upper and lower parts of the membrane.

The void volume may be at least 5% and at most 90% of the volume of the total membrane. Preferred percentages are 10 to 80% or more preferred 20 to 75%. The formation of asymmetric membranes are well known in the state of art, and can be made by many of the well known processes. One preferred type of asymmetric membrane is made by the process called phase inversion using polymeric materials. The structure of such membranes and how to make them with the different morphologies and different layers with controllable pore sizes is well known in the state of art. The polymers which may be used are for example polyacrylonitrile and their co- and tri-polymers, and polyacrylonitrile polymers which are converted into none soluble membranes by any number of processes to give oligomerization structures including to carbon membranes, polyamides (aliphatic and aromatic), polyvinyl chloride and its copolymers, chlorinated polyvinyl chloride, cellulosics, epoxy resins (e.g. polyphenoxy), polyarylene oxides, polycarbonates, homo- and co-polymers on the basis of heterocyclic compounds, (e.g. polybenzimidazoles), polyvinylidene fluoride, poytetrafluoroethylene, polyesters (saturated and non saturated which may be cross-linked through the double bonds after membrane formation), polyimides, solvent resistant polyimides made by first casting polyamic acid and then heating, and solvent resistant polyimide membranes made by casting unsaturated polyimides (as for example in European patent application 0 422 506 A1, Burgoyne, et al) and which can be cross-linked through the double bonds by free radicals or ionizing radiation, solvent stable based on an aromatic polymer having a thio ether and oxidizing the membrane to insolubilize it (in Nakashima et al, U.S. Patent No. 5,272,657), fluoropolymers, polysulfones, polyether sulfones, polyaryl sulfones, polyetherketones, polyether etherketones, polyelectrolyte complexes, polyolefins, polyphenylene sulfide, and polyphenoxy polymers. Included are the derivatives of these polymers which can be made into asymmetric membranes. Such derivatives are generally but not exclusively based on sulfonation, nitration and amination, carboxylation, hydroxylation, nitrilation, halogenation (e.g. bromination), hydroxy methylated, ethers and esters of hydroxylated derivatives, and partial hydrolysis to increase the number of end groups. Asymmetric membranes may also be made from a mixture of more than one polymer, e.g., polyvinylidene fluoride and polyvinylacetate.

One preferred class of asymmetric membranes is made by the process of phase inversion. These membranes can be made into flat sheets, hollow fibers, tubelets or tubes. Examples, but not limited to of such membranes and there preparation and materials can be found in U.S. Patent No. 4,767,645, 4,778,596, 5,039,421, Linder et al., 4,214,020, Ward et al., 4,952,220 Langsam, and the entire contents of these and other patents and patent applications mentioned in the present specification are incorporated herein by reference.

Examples of commercially available supports: Abcor HFK-131 MWCO 10K, Osmonics Sepa HZ-03 (MWCO 40 to 50K) and Sepa HZ-05 (MWCO 2K), Desal E-100 (MWCO 35K) and E-500 (MWCO 500,00), Filtron Omega 300K, 30K and 10K, and UF and MF membranes from A/G Technologies, Hoechst/Celanese, PCI, and X-Flow and Membrane Products, Kiryat Weizmann, Israel.

In addition to polymeric supports, there are asymmetric inorganic or ceramic supports or carbon membranes or metal. membranes. These none polymeric membranes (except for carbon membranes which may be made by casting a polymeric organic material and then pyrolyzing under controlled conditions) are usually not made by the phase inversion methods of organic polymer membranes. Often inorganic, ceramic, and metal asymmetric membranes are made by sintering and or sol-gel coatings, drying and sintering. The thicker porous support structure is made by sintering large particles, the upper layer is made by casting by slip coating (for example) a thin layer of smaller particle and sintering, or coating a sol/gel, drying and sintering. Optionally an intermediate layer exist by sintering particles after coating particles intermediate between the upper and lower layers. By this process MF and UF membranes can be made. To make tight UF and NF membranes the upper layers may be coated with a sol-gel technique with inorganic materials and careful dried and then heated. All these may also be used as supports in the invention. Examples, but not limited too are alumina supports coated with zirconium oxide or titanium oxide, or carbon porous supports coated with zirconium oxide. Other inorganic supports which may also be coated are silicon carbide and nitride. In addition there are inorganic ceramic supports coated of filled with inorganic polymers such as polyphosphazenes or polysiloxanes or organic polymers in general to convert the microporous MF support into a UF membrane.

Non-limiting examples of carbon and ceramic asymmetric membranes are given in U.S. Patent No. 4,919,860 (porous carbon membranes Schindler et al.), U.S. Patent No. 4,810,273 (porous ceramic filters, Komoda), European Application 0 381 812 A1 (Sintered coating for porous metallic filter surfaces, Gaddis et al.), Application for Canadian Patent 2,27,678 (Metal Oxide porous Ceramic Membranes with Small pore sizes, Anderson, et al.). Examples of companies which make inorganic supports are US Filter,

Another class of asymmetric metal membranes is the use of a porous metal support where the pores on one surface are partially filled with inorganic particles to form UF membranes. For example a porous stainless steel metal. tubes filled with sintered TiO₂ particles in the pores of one surface (see European Application 0 381 812 A1 [8/9/89] where sintered metal oxides of, preferred TiO₂, of 0.2 to 1.0 micron are applied to a porous stainless steel tube and sintered together by heating). This may also be used in the invention.

The ceramic, inorganic, carbon, metal. and solvent resistant organic polymeric membranes such as polyimide (Bend, Ube (U.S. Patent No. 4 378 324), oligomerized polyacrylonitrile), crosslinked polyacrylonitrile (Memtex and Membrane Products, Kiryat Weizmann, Israel), polyolefins (Hoechst, Celgard), bismaleimide polymer membranes (U.S. Patent No. 5,035 802 Jul 30, 1991), oxidized polysulfone polysulfide membranes, polyetherether ketone and polyphenylene sulfide membranes are examples of preferred supports when the application will be for solvent applications.

Moreover, in order to make the upper layers with reduced porosity, pores may be filled with different materials, which may be inorganic or organic. One type of in organic polymer used is polyphosphorazenes. Examples of ceramic membranes are UF membranes made from alumina coated with TiO₂, or ZrO₂, carbon coated with TiO₂, membranes.

The configuration of the membranes may be flat sheets, tubular, tubelets, hollow fibers. The tubes and flat sheets are preferable supported on woven and preferable nonwoven material but the tubelets and hollow fibers are not supported. The nonwoven or woven materials may be made of polyolefins (e.g. polypropylene or polypropylene/ polyethylene, polyesters, polyimides, polyamides, polyether ketones, polysulfides and inorganics or glass or metal materials.

The membrane supports may be configured in a modular form of spiral or plate and frame or hollow fibers or tubular systems. A list of manufactures of asymmetric porous membranes and modules, for all the different configurations, made of organic polymers, ceramics and inorganics may be found in the "Handbook of Industrial Membranes", K. Scott, Elsevier Publishers.

The filling/coating solution of the invention may be applied when the membrane is individual, such as a single sheet or hollow fiber or as an aggregate found inside of the modules. For example it may be applied on the flat support or substrate or it may be applied to the flat support within the plate and frame device or in the spiral wound form. For tubelets, hollow fibers and tubes it may be applied on individual pieces or on a collection of pieces when already placed in the module.

All supports may be treated by well known state of the art methods, such as cleaning with surfactants, use of surfactants to modify wetting properties, annealing by heat treatment to change pore size, and prewetting with solvents. Optionally conditionings may be chosen from these methods prior to the membrane treatment of the invention. In addition the invention my be applied to membrane which have already been hydrophilized with a thin bound or crosslinked coating on all its surfaces with a hydrophilic polymer such as, but not limited to, polyvinyl pyrrolidone, polyvinyl alcohol, polyethyleneimine amine and hydrophilic monomers which have been polymerized on all the accessible membrane surfaces. This is a common approach of many manufactures to supply their intrinsically hydrophobic MF and UF membranes in a hydrophilized. Such membranes may also be used in the invention.

### The coating solution

The coating solution may contain the following components: Those components that react and are incorporated into the selective barrier. These may be chosen depending on the desired selectivity and stability and the support being used, from polymers, oligomers, monomers, low molecular weight polyfunctional reagents and catalysts. Non-reactive components that are nevertheless incorporated into the final membranes may also be added to the solution. They may serve different purposes. One purpose may be to partially plug the pores thus increasing the resistance to flow through the pores of the reactive species, and in this way increase their concentration and extent of reaction. For such purposes the non-reacting species may be a polymer or oligomer of higher molecular weight than the reactants. The polymer, while not reacting to form covalent bonds, may still interact with the final crosslinked structure by electrostatic, polar, H-bonding and hydrophobic interactions. It may be intimately mixed to form a non-leaching component. The solution may also contain components which may or may not be incorporated in the final cross linked barrier but are there to control or accelerate the reaction. For example acid, bases, buffers or salts to control pH, catalysts to enhance condensation or polymerization, and minority solvents and surfactants or complexants to enhance solubility. Surfactant and solvents may also may also be present to improve the wetting and coating properties of the solution with the support. Solvents may also be present to swell the support to improve the penetration of at least one component into the membrane polymer bulk. In one aspect at least one of the components which is incorporated into the cross-linked structure can be absorbed and/or swell the support.

The major solvent for the components is preferably water, when suitable, from the point of view of cost and safety. In certain cases were the support is solvent stable, solvents may be used as the major solvent medium. One advantage of the invention in needing very low concentrations of components, is that many materials which are thought as being insoluble in water have solubility in the desired range of my process. This allows the use of water as a solvent in many cases or aqueous solvent combinations.

In the case where it is desirable to modify MF membranes, latex, and colloidal particles, for example, may also be present in the solution. They will partially plug the upper pores, and the spaces between the particle and the pore wall will then be filled with the soluble components forming the selective barrier.

In the case were water is the solvent hydrophilic polymers and oligomers may be chosen as one or more of the components. These polymers and cross-linkers may be chosen from the list of reactive hydrophilic polymers and oligomers found in U.S. Patent No. 4,711,793, 4265745, 4659474, 4039440, 4,778,596, 4,767,645, 4,360,434, 4,704,324 and are included by reference. Reactivity infers they will react with the other components or themselves when they are concentrated within the pores and surface of the membrane. The reactive groups which may also give hydrophilic properties to the polymer. The polymer may also contain other groups which do not undergo reaction, and may be ionic, polar or hydrophobic, and modify the selectivity properties of the final membrane. A polymer may be modified to introduce different groups into it whether it be reactive groups or non-reactive groups for controlling the final membranes properties. The polymer may contain reactive groups which are hydrophobic in nature (halo benzyl, or halo alkyl, vinyl, isocyanate etc.), but the polymer as a whole may be hydrophilic, because of the presence of other groups. The polymer may be hydrophobic and contain water sensitive groups such as isocyanates, isothiocyanates, acyl halides, cyanates, or non water sensitive groups. In the case of the former (water sensitive groups) than the polymer should be dissolved in solvents not containing water. In the case of the latter (none water sensitive groups) than a solvent may be used that also contains water. These polymers may also contain other functional groups to modify or react with still other groups under the conditions of use. Examples of hydrophilic reactive groups are amines, hydroxy, sulfhydryl, carboxylic, aldehydes, ketones, sulfonium phosphonium, aliphatic and aromatic thiols, glycidyl, phenol groups and hydroxybenzyl groups.

Some preferred hydrophilic polymers and oligomers are polyethyleneimine, polyvinyl amines, amino derivatives of styrene and its copolymers, polyvinyl alcohol and its derivatives. Derivatives of these polyamines which can contain sulfonic, carboxylic and phosphonium groups, to make charged and amphoteric monomeric, oligomeric and polymeric molecules, as described in the above patents, including copolymers which contain different groups, especially polar and ionic groups. As described in the above patents, the polyamines may also be taken for example from the category of polyvinylamines and their co- and tri- polymers, polyaromatic compounds such as aminopolystyrene, amine containing engineering plastics of aromatic polysulfones, polyethyleneimines and derivatives of polyethyleneimine.

In addition there are polyphenol polymers such as polyvinylphenol and its copolymers. These polymers are reactive not only through their -OH groups but also because they have activated or electron rich aromatic structures which may readily undergo electrophilic reactions with electrophiles such as formaldehyde or other aldehydes. Besides phenol groups on a polymer chain there may also be aryl amines which are also reactive because of both the amine group, and the electron rich aromatic groups. Other such system based on thiophenols are also included.

As described in US 4,704,324 (Davis et al.) positive charged onium groups (e.g. suffonium, quaternary ammonium, phosphonium, etc.) are also preferred as reactive groups when used together with components which contain reactive nucleophiles (e.g. of such groups are thiolate ions, carboxylate ions, alkoxide, phenate, mercaptides, see patent for further list) such when the two react together they form a covalent bond with charge elimination.

Polymers or and oligomers containing reactive groups on the same molecule which can react with each other upon concentration may be used. Such reactive group combinations, but not limited to, are displaceable halogenated triazines, diazines and quinoxalines with amines, sulfide or hydroxyl groups; epoxy groups which can self condense or react with hydroxyl, amino, carboxyl groups. Vinyl groups which can undergo free radical coupling polymeric reactions with electrophiles or nucleophiles for activated vinyl compounds.

Another preferred mode is to add a multi-functional reagent which will react with the polymer or oligomer under the conditions of concentration in the membrane. Non polymeric or oligomeric polyfunctional compounds which can be used to crosslink the polymers and oligomers under the conditions of concentration may be reactive reagents as described in the above patents which are reactive because of multiple groups such as epoxide groups, aziridine, aldehyde imidate, isocyanate, isothiocyanate, hydroxyl, carboxylic acid anhydrides, acyl halides, sulfonyl halides, carbonic acid imide halides or N-methylol groups, or moieties containing leaving groups as tertiary amines, or as anions, polyhalogenated alkyl compounds, polybenzyl compound with leaving groups such as chloro, bromo, quaternary ammonium, sulfonium, and sulfonium. For a list of such groups and other compounds that contain them, but not limited to them refer to U.S. Patent No. 4,778,596. Especially preferred because of their reactivity and stable bonds formed are di- and tri-chloro triazines, di- and tri- and tetra-chloropyrimidines, dihaloquinoxalines and, aromatic epoxies, methylol derivatives and their reactions with amino groups, thiolate ions. sulfide ions, hydroxy groups. Also preferred are reactions between activated halo or nitro aromatics with nucleophilic reagents such as phenoxide ions, thiophenolates, amines. The foregoing reagents may also contain ionic and/or polar groups, in order to improve water solubility, and/or to ensure the presence of such groups in the final structure.

One preferred mode is to react the polymers and oligomers with the non-polymeric multifunctional reagent (e.g. the reaction of polyphenol with a low molecular weight polyepoxy compound or polyethyleneimine with glutaraldehyde or cyanuric chloride). Another preferred mode is that two different low molecular weight poly functional compounds will react with each other to make the selective barrier (e.g. phenol with formaldehyde). In still another case the reaction can be between two polymers or oligomers to form the selective barrier E.g. polyethyleneimine with a novalak epoxy).

For example reactive polymers may in some cases be replaced with low molecular weight reagents as for example a polyvinyl phenol, with a polyhydroxy benzene or naphthalene. Or the polyethyleneimine may be replaced with tetraethylenepentamine. Low molecular weight reagents may be replaced in some cases with polymeric reagents-for example cyanuric chloride may be replaced with a dichloro triazine bound to a polyamine with one remaining active chloro (active only at elevated temperatures) on the triazinyl pendent forming a polymer with many reactive pendants which can react with the remaining imines on the polymer when concentrated from a dilutes at elevated pH and temperature, in the pores of the membrane.

One preferred reagent for forming selective barriers are phenol and hydroxy methylated phenols as polymers, oligomers or multifunctional monomers. In U.S. Patent No. 4,326,958 composite membranes composed of a support (e.g. UF polysulfone) and coated with a methylolated vinyl phenol copolymer (the other monomers of the copolymer may be chosen from vinyl monomers including acrylic acid sodium vinyl sulfonate, 4-vinyl pyridine, etc.). The methylolated vinylphenol polymer is preferably crosslinked with a catalyst in a solvent. The catalyst may be inorganic acids (e.g. sulfuric hydrochloric phosphoric) or alkali metal. salts. Sulfuric is preferred because it can both cross-link and sulfonated the final membrane. The solution of polymer is spread on the surface of the porous support and a part or all of the solvent evaporated and the membrane is heat treated for a suitable time to perform the crosslinking treatment. Instead of using the methylolated vinyl phenol polymer it is possible to simultaneously carryout the methylolation and the crosslinking in the coating on the porous support. In this process the vinyl phenol polymer, formaldehyde and an acid is heated in solution to methylolation and partial crosslinking and then the solution is coated on the support or immersed and is heated to complete the crosslinking. The polymers, reactants, solvents surfactants, catalysts, reaction conditions and post treatments described in this patent are included by reference and may be used in the invention when they are applied in a dilute solution under pressure and the deposited membrane is fixed by a crosslinking reaction, at least partial, while under pressure.

Similar to the above dilute solutions of phenol-formaldehyde oligomers and polymers may be used to form selective barriers in the invention. For example dilute resoles (phenol type reactants with an excess of formaldehyde) can be applied under pressure to the support and crosslink as it concentrated by using a hot solution. Ether crosslink bonds will form in acidic or basic solutions. Methylene bridges will also form under acidic conditions. A post heating step will cause addition crosslinking and change the ether bonds to methylene bonds. Novolak (phenol formaldehyde with an excess of phenol) will crosslink with additional formaldehyde or paraformaldehyde or hexamethylene tetraamine. In the invention novalak and their precursors, and crosslinking reagents may be applied under pressure to the UF support under pressure, fixed in place by crosslinking and further cured at higher temperatures as needed. Instead of formaldehyde furfural acrolein, acetaldehyde, butyraldehyde may be used. In addition mixtures of peroxidase enzymes may be used to polymerize phenols and reactants containing phenol groups (e.g. lignin). Alternatives to phenol are resorcinol, bisphenol A monosubstituted phenols (e.g. 0- and - p cresol and corresponding chloro phenols) unsaturated phenols (2-allylphenol), tannins, pyrogallol, ellagic acid and gallic acid.

Other means of crosslinking the phenol polymeric and oligomeric structures is by redox reactions, and these are also included in the invention. In addition to hydroxy containing aromatic system amino containing aromatic systems are also electron rich and can under go redox crosslinking reactions, and are included in the invention together with their crosslinking systems. Also redox crosslinking may be used for polyfunctional aromatic amines (e.g. p- and m- phenylene diamines and 2,4- Bis(p-aminobenzyl aniline).

Other hydroxy containing polymers, such as hydroxy and hydroxy methylated polysulfones, polyethersulfones and polyphenyl sulfones are can be used in the above reactions, and are preferred for many cases as they are good membrane forming materials have good oxidant resistance.

Other polymer which may be used are urea-formaldehyde and melamine -formaldehyde oligomers and polymers and their catalysts used for crosslinking.

The reaction of vinyl pyridines and a dihalo organic compound forms a crosslinked insoluble copolymer, and my undergo subsequent reaction as with amines. These reactive combinations can be used in the invention and are incorporated by reference from U.S. Patent No. 4,014,798. The reaction between di- or poly-halogenated (especially chloro- and bromo-) alkyl and benzyl organics with polyfunctional amines and hydroxy compounds and oligomers and low molecular weight compounds are another preferred combination of reactants.

Derivatives of engineering plastics (some of which have been mentioned above) may also be used to in the coating solutions. Examples of such engineering polymers are polysulphones, polyethersulfones, polyphenysulfones, polyetherketones, polyetheretherketones, aromatic polyamideimide, polyimides, polyphenylene oxides, polybenzimidazoles, aromatic polyamides, phenoxypolymers, fluoropolymers such as polyvinylene fluoride and its copolymers, polyolefins such as polyethylene and polypropylene and their copolymers, polyvinyl chloride and its copolymers, polystyrene and its co and tri polymers, polyacrylonitile and co and tri polymers etc. Their derivatives may be sulfonic, chlorosulfonic groups, carboxylic, nitro, hydroxyl, hydroxymethyl, esters and ethers of the hydroxymethyl and hydroxyalkyl and hydroxyaromatic groups and their ester and ether derivatives, halomethyl groups, sulfide, and thioalkyl and thioaromatic, vinyl, allylic, acetylenic, phosphine, phosphonic and phosphinic, amino methylated etc. The list of substitute polysulfone membranes described in U.S. Patent No. 4,894,159 and M.D. Guiver etal p. 347, Polymer Materials Science and Engineering, Vol. 77, Fall Meeting, Daly et al, in "Chemical Reactions on Polymers" ACS Symposium Series 364, D'Alelio U.S. Patent No. 4,517,353, Warshawsky in Ion Exchange Technology, 1984, pp 484-490 and Journal of Polymer Science: Part A: Polymer Chemistry, Vol.28, 3303-3315 (1990) are incorporated by reference herein. A particularly attractive way of derivatizing aromatic polymers, especially polysulfone polymers is by lithiation and/or bromination-lithiation and subsequent derivatization through these derivatives is described in the Guiver references. Another preferred approach is the halomethylation and subsequent derivatization as described in the Warshawsky references. Particularly preferred polymers are amino or hydroxy or halomethylated or hydroxymethylated polysulfones, polyethersulfones and polyphenylsulfones which may be applied to the membrane in solvent aqueous mixtures under conditions of pH (e.g. acidic conditions), temperature and pressure to get crosslinking within the pores, or in the presence of other reagents such as formaldehyde or other aldehydes especially polyfunctional aldehydes, polyfunctional epoxy compounds or multifunction reagents which will react to the aromatic moieties of the polymers via electrophilic substitution. On preferred approach is the application of polymers which have been made polar by derivatization and which may be crosslinked through the functional group or by reaction through another group such as an aromatic ring. The formation of methylene bridges in acidic media by electrophilic substitution involving benzylic carbocations on aromatic rings is one preferred means of crosslinking as it forms chemically stable bonds.

In the application of the invention to asymmetric MF supports, colloidal particles, or dispersions of latex particles may be used together with reactive polymers, oligomers and or with polyfunctional reagents. The function of the particles is to fill partially the pores of the microporous layer, and to allow the soluble components to concentrated in the space between the particle and the pore wall, where upon concentration they will react and cross-link and form the selective barrier. The particles may themselves be reactive or may act as nonreactive fillers. These particles are in the submicron range of less than 0.5 micron. All the reactive groups described above may be placed on the particles surface. Especially referred are particle containing epoxy, halo triazine, halo diazine, haloquinoxalines, methylol and halobenzyl groups.

Low concentration of submicron sized particles and colloids may also be used in formulations to make NF and RO membranes to plug imperfections found in the MF and UF support on which the final membrane is made. These particles are in much lower concentration then the soluble reactive components which form the selective barrier. Their purposes is to fill in large imperfections found in the UF support.

If the particles in the applied coating solution are in liquid form, they may be a source of reactants for reactions in the pores, then upon concentration the emulsion may break in the pores and then react with other components by condensation polar reaction, polymerization reactions such as free radical or pericyclic condensation, etc. For example, an emulsion of styrene/divinyl benzene with an initiator (H₂O₂/FeSO₄) dissolved in the aqueous phase which will polymerize when concentrated in the pore. Another case is liquid epoxy emulsion (stabilized with surfactant) which will react in the pores with a polyamine or polycarboxylic or polyphenol or polyhydroxy compounds with a catalyst as needed.

In another case monomers and initiators are dissolved in a dilute form in a water solution and when concentrated in the pore begin to polymerize. At a significantly greater rate than in the solution. A preferred monomer initiator combination is a water soluble monomer (e.g. acrylic acid, methyl methacrylate, hydroxyethyl methacrylates, acrylamide,) divinyl crosslinkers, and a free radical initiator (azo compounds, peroxides, hydroperoxides, and redox salt combinations) which undergo addition polymerization. Besides water soluble monomers such hydrophobic monomers as styrene, methyl methacrylate, divinyl benzene, halomethylated styrene may also be used as a dispersion or in the dilute state they are being used in a high fraction of their content may dissolve in the water solvent. Alternatively the monomer/initiator combination may be dissolved in an organic solvent.

Cationic and anionic polymerization and condensation polymerization systems may also be used. The polymerization chemicals and procedures may be taken from many of the well known books on the subject (e.g. Sorensen and Campbell, "Preparative Methods of Polymeric Chemistry" or Lenz, "Synthetic Organic Chemistry").

Enzyme catalytic UF RO and NF membranes can be made using preferably water soluble or dispersible enzymes such as but not limited to subtilisin, papain, chymotrypsin, lipases, mucinase, isomarase, etc. Typical these enzymes will be crosslinked with dialdehydes, divinylsulfones, di- or tri-chlorotriazines, tri- or tetra-chloro pyrimidines, diglycidyl compounds, and benzoquinone.

Emulsions and dispersions based on liquid monomers, oligomers and polymers, stabilized with surfactants can be used such as liquid epoxies LMW and oligomers, such as polyisocyanates, polyisothiocyanates, and vinyl monomers such as styrene, divinylbenzene, methacrylates, etc.

Non water soluble polymers and crosslinkers for such polymers which may be used in organic solvents can be, but not limited to U.S. Patent No. 4,214,020 (Ward et al.), and U.S. Patent No. 5,265,734 (Linder, Silicone derived solvent stable membranes) and European Application 0 394 193 A2 (Linder, Coated Membranes) are for example, polysiloxanes hydroxy terminated, polysilazanes, polyepichlorohydrin, polyisoprene, polyvinyl halides, polyvinyl aldehydes, polyvinylketones, halomethylated aromatic oxide polymers (e.g. chloromethylated polyphenylene oxide), and halomethylated polysulfone, polyethersulfone, polyarylsulfone, and polyetherketones and their sulfonic and quaternized derivatives. Crosslinking agents for the halo containing polymers may be primary amino groups, and polyfunctional amino (both primary and secondary), and polyfunctional organic -SH compounds and alkali metal, sulfides.

Water is the preferred solvent for many important membrane formation procedures of the invention. It is inexpensive, safe to handle and has good solubility properties especially when the components are in low concentration. The use of water solvents determines the type of reactants that will be used and how they are applied. If components do not have water solubility even at the low concentrations used, then solvents can be added to improve the solubility in water. These are water miscible solvents such as acetone, methanol, ethanol IPS, DMF, NMP, DMSO, THF, sulfoxane, etc. In some cases the component can be used in an emulsion. If the component is a liquid itself it can be dispersed in the water solution, and stabilized, if needed by surfactants and physical stabilizers such as particles or polymers (e.g. polyvinyl alcohol, PVA). When pressed into the membranes it will mix with the other components under pressure. In some cases the components can be applied in an organic solvent which may or may not be water miscible. In the case of forming silicone selective layers, the components including polymers, crosslinkers, catalysts, and trace amounts of other solvents (e.g. water) which may act as co catalysts may be applied in a solvent like hexane or petroleum ether.

The major polymeric molecule structures may all be used in the solution applied under pressure to the surface of the asymmetric membrane. These are flexible coils , rigid rods, cyclic molecules, random short branched molecules, random long branched molecules, regular comb branched and regular star branched molecules, and the relatively new polymeric architecture called dendritic polymers. These are divided into groups called a) random hyperbranched polymers, b) dendrigrafts and c) dendrons/dendrimers (called Starburst^{™}). Dendrimers possess a unique converging/diverging pattern where a single core is surrounded by an increasing number of terminal groups as the generation number increases. Examples of dendrimers which may be used are polyamidoamine dendrimers with ethylene diamine cores from Michigan Molecular Institute, polyprolyldimine dendrimers from DSM, hyperbranched polyols from Aldrich Chemical Co., and numerous other dendrimers described in Polymeric Materials Science and Engineering, Vol. 77, Fall meeting, September 8-11, 1997, Las Vegas Nevada.

### Modes of applying the pressure difference

To force the reactants and/or fillers into the pores, a direct pressure on the small pore surface of the membrane is applied, and/or a vacuum is applied on the permeate side of the membrane. The pressure or vacuum may be applied only in the stage of concentration and reaction and in subsequent steps such as heating or surface modification (e.g. charging) the pressure or vacuum may be continued or not, as needed for individual cases. The cases being the objective of forming tight UF or NF or RO or dialysis or ED gas separation membranes or catalytic membranes for selective separations or selective separation together with catalysis or catalysis alone. Each having different pressure considerations in conjunction with the support, reactants/solvent and conditions (pH, temperature, time, etc.).

The magnitude of the pressure may vary from a fraction of a bar to 10 to 20 to 100 bars. This will depend on the support being used, the molecular weight of the reactants, solution viscosity, reaction velocities. The exact conditions may be determined by experiment in order to achieve the desired selectivity, stability and flux, and/or catalytic activity.

Pressure gradients may be generated by a pressure pump, vacuum, gravity capillary forces. The pressure or vacuum may be applied with a flow over the surface of the membrane, or as often preferred without flow. For example a solution with the reactive components is added to the modular or cell unit on the tight asymmetric side of the membrane (in most cases the feed side), and after flow has superseded the pressure or vacuum is applied.

In addition to pressure and vacuum there may be cases but less preferred where the solution is applied to the tight pore asymmetric surface of a dried membrane, and the solution is pulled into the pores and reacted because of capillary forces. This will however not be applicable for many system because of the short duration of the capillary forces as the pores will be filled in a fraction of a second.

### Conditions of application

The conditions of applying the solution of components is that the components should have a low reaction velocity in solution, because of the dilute state, and upon concentration in the pores will react rapidly because of the high concentration of the different components. In addition to the concentration of reactants in solution, the pH, temperature and the concentration of initiators or catalysts, solvents, surfactants, etc. may be used to control the reactivity such that the above conditions are met. For example in the combination of polyethyleneimine and cyanuric chloride, relatively concentrated solutions of 2% + of the individual components will react rapidly at 10°C to 20°C and less rapidly at 0°C to 5°C. Even at 0°C to 5°C the reaction is too rapid at these concentration. A dilute solution of 0.025% PEI and 0.006% cyanuric chloride does not react noticeably at 0°C to 5°C. Upon concentration in the pores the reaction will be significantly enhanced and the system crosslinked in the pores under the application of pressure. The pH must also be adjusted to a proper range. as acidic and basic ranges will hydrolyze the chlorine from the cyanuric chloride and compete with crosslinking as the concentration of cyanuric chloride in solution is very low. Even though the reaction between cyanuric chloride and the polyamine is enhanced under basic conditions so is the rate of hydrolysis of the cyanuric chloride. Thus an optimum pH must be found to assure that the relatively small amount of cyanuric chloride present is not hydrolyzed before it crosslinks the polyamine in the pores. Thus an optimum temperature and pH for the dilute solution would be by way of example pH 7.0 and 0 to 5°C. A different system than cyanuric chloride is tetra- or tri- chloropyrimidine which can be worked with a room temperature and at more basic pH because of its lower rate of hydrolysis. At more basic pH the amines on the PEI are more reactive, and the reaction rates can be enhanced such that the reaction in the pores is faster with out noticeable reaction in the solution.

Instead of triazines or diazines used above conditions are easily found for the use of water soluble polyepoxides or an emulsion of water insoluble liquid epoxies, dihaloquinoxalines, polyaldehydes, polyisothiocyanates, polyalkyl halogens and polybenzyl halogens and other crosslinkers referred to above for reaction reactive amino, hydroxy and sulfide containing polymers and oligomers.

Another consideration which controls the concentration of reactants and the applied pressure is the need to achieve a thin selective layer for practical flux. Generally the selective layer will preferably be less than one micron. With the use of UF membrane supports, for example, high fluxes with low pressures are readily achieved. If the concentration of reactants is high very thick layers are built up in a short period of time. This gives too low fluxes and low selectivity. For example useful pressures of 1 to 10 atm will build up prohibitively thick layers in 10 to 1 minute if the concentrations are more than 1% reactants for typical UF fluxes of 80 Imh/atm. To work with 10 atm a concentration of less than 0.1 % should be used. Thus using the consideration of desired thickness, UF flow rates, practical pressures, times of pressure application (less than 1 minute is generally too short, and 60 minutes to long. A good working time is 2 to 30 minutes and the knowledge of deposition per amount of solvent passing through the membrane, the desired concentration of reactants can be calculated and used as a starting point. The deposition of reactants per volume passing through the membrane is usually taken as more than 90% because the conditions are chosen for rapid reactions upon pore concentration

A measure of the conditions to choose solutions of different conc. of reactants, pH, temperature, solvents, catalysts initiators etc., can be made by observing and timing the rates of cross-linking by gelation and precipitation in solution. In this way the dilution and reaction conditions can be chosen such that only upon concentration a crosslinking reaction will appreciably occur, and very low reaction rates will be found in solution. For example a second order reaction with the reactants being in a 1 % concentration each may start to gel in solution after 6 minutes under a given pH and temperature. If the concentration are reduced to 0.01% gelling will only occur after 600 minutes (10 hrs.). Choice of conditions must also take into account that precipitation in solution of any of the components because of pH or otherwise is in most case not desirable. In most cases a small amount of reaction in solution can be tolerated as long as it does not lead to gelation or large viscosity increases, or hydrolysis of the functional groups such that they cannot participate in the crosslinking reaction under pressure. In all case the large body of reactive chemistry can be used also as a guide in finding the right conditions.

In another preferred system polyhydroxy phenols or hydroxy benzene reagents or hydroxy or hydroxy methyl aromatic polymers such as hydroxymethyl polysulfone are crosslinked upon concentration in the membrane using polyaldehydes or formaldehyde. In this case the reaction can go under acidic or basic conditions. The conditions of reaction upon concentration in the pores of the membrane and not in the solution are readily found.

In another system a dilute water soluble enzyme (subtilisin) is mixed with glutaraldehyde and pressed through a membrane at 15°C and pH 7.5 to give a membrane with NF selective and enzymatic activity. By changing the ratio of enzyme to crosslinker under the same conditions, a UF membrane is made with enzymatic activity. These membranes can be used to both cleave and separate the product of enzymatic hydrolysis from the substrate, and also to resolve enantiomeric species by hydrolyzes of one chiral species and then letting the hydrolyzed product through.

These enzymatic UF, NF RO membranes can be made on both non-solvent resistant and solvent resistant UF support. In the latter the use of these membranes in the field of organic enzymatic reactions is an important application.

Enantiomeric separations can also be separated by filling the pores with a chiral agent. Since NF and RO properties can be made there is a tight fit of permeating molecules and thus a good resolution is achieved under pressure. The combination of chiral activity an NF or RO rejection properties gives good resolution either under pressure (for the NF membrane) or in dialysis (for the RO membranes).

Pervaporation membranes may be made by the invention. One preferred application is ethanol concentration from dilute aqueous streams. By placing the selective barrier in a portion of the pores of the upper layer of the asymmetric membrane, high selectivity and flux can be achieved. For example by applying a dilute solution of polysiloxane, tetraorthosilicate, catalyst and traces of water in a hydrophobic solvent a thin crosslinked silicone layer partially filling the support pores on the upper surface will form and give high flux, highly selective membranes. In many cases of pervaporation solvent stable or solvent resistant supports are needed. This is especially true if the membranes are to be used in petrochemical applications.

Another application of the invention lies in making of non enzymatic catalytic activity barriers with UF NF and RO selectivity, and dialysis membranes for chemical purification and kidney dialysis using urea selective membranes and test kits needing selective catalytic barriers.

Porous electrode materials have many uses in such areas as electrolysis of water to O₂ and H₂, electro-synthesis. They are however commonly employed in fuel cells for gaseous reactants, and removal of dilute ionic contaminants from an aqueous solution. In such a system charge transfer occurs within the pores of the electrode. In many electrochemical reactions however the efficiency of the conversion is significantly reduced below the thermodynamic maximum by such kinetic effects as diffusion and charge transfer kinetics at the interface between the electrode and substrate. This is especially true in multi charge transfers such as the oxidation of H₂O to O₂. In this case catalytic electrodes have been developed to lower the kinetic barrier to such type of transfers. In addition such catalytic electrodes are being developed for fuel cell and the conversion of alkanes (LMW, e.g. methane or ethane) to H₂. In the invention thin catalytic NF and RO barriers can be made. The barriers have to be thin to allow high flux and have small pores to allow efficient contact with the substrate. To form such membranes a mixture of components is pressed into the upper asymmetric layer of a porous metal. membrane. The components will react in the pores to form the NF or RO electrode barrier. Catalytic electrode membranes of the invention will work by permeating the gas or solution through the electrode from the asymmetric dense side to the porous side with an electric potential applied to the electrode.

In the use of electrode membranes to selectively remove a given species in a dilute solution via a redox reaction without interference with other ions or fouling on the surface, I can with the invention place on the asymmetric tight side of the electrode a NF or RO membrane which will prevent the permeation of most ions and organic foulants into the remainder of the electrode and thus pass only the desired ion, (for e.g. NO₃). Alternatively if the NF or RO barrier is electro catalytically active only those ions passing into the thin layer will be oxidized. This approach is important for removing ions from drinking water.

ED membranes are based on crosslinked ion exchange membranes made from either fixed anionic or cationic charge, which allow the passage of counter ions and exclude co-ions under an electric field gradient. The selectivity is controlled by the charge density which is determined by the quantity of charge and the degree of crosslinking to control swelling. As these ion exchange membranes are gel like they are relatively weak and only thick membranes with embedded nets have sufficient mechanical strength to be used commercially. Thick membranes have high resistance and this reduces the efficiency of using the electric field gradient to transport the ions, and increases operation costs. Strong thin membranes would be useful. With the invention these membranes can be made. Using UF support with low electrical resistance, a mixture of components can be applied which will react and form in the upper pore structures and surface a crosslinked ion exchange membrane. For example an alkyl ester of styrene sulfonic acid, divinyl benzene, and a catalyst are applied in an aqueous solution under pressure and elevated temperature, into a UF polysulfone membrane. After crosslinking the ester groups are hydrolyzed and the resultant membrane has a thin gel layer with good cation exchange properties. In a similar way anion exchange membranes can be made using chloromethylated styrene, divinyl benzene, and an initiator.

In the application of the components to a membrane surface the components should be in a given concentration. As discussed above this concentration can be approximated by choosing the desired thickness, knowing the volume flow as a function of pressure and the porosity of the support, and then refining the calculations by experiment. This procedure is relative straight forward for application to single flat sheets, fibers, tubes, tubelets, and modules containing many tubes, tubelets, and hollow fibers. In the case of flat sheets in plate and frame devices and spirals the presence of net feed spacers, complicates the problem because of the possible absorption of material on the non-membrane surfaces and not on the membrane. The excess of material needed for any given component above what is theoretically needed to form a given thickness depends on the particular adsorption characteristics. This can only be found by experimentation and comparison to singly sheet modification. In the case of spirals and plate and frame devices it may be desirable to carry out the process of coating and filling under pressure twice. In the first application of reactants the none membranes surfaces will be saturated with absorbed material and in the second application the final membrane will be formed.

### Post Treatment Steps of The Invention

Further treatment of coated membranes after the coating and reaction step are well known in the state of art (see U.S. Patent No. 4,360,434, U.S. Patent No. 4.039,440 U.S. Patent No., U.S. Patent No. 4,326,958, U.S. Patent No. 4,812,270, U.S. Patent No. 3,551,331, 4,659,474, 4,778,596). Such treatments include heat treatments to complete reactions or to initiate additional reactions which only occur at elevated temperatures, treatment with acid and bases either to improve flux, or complete reactions, often together or in sequence with a heating step. For example in 4,812,270 acid and heat are used to improve flux in a post treatment step. In U.S. Patent No. 4,326,958 the membrane flux is improved by immersing the membrane in an inorganic or organic acid or base or a salt thereof. In U.S. Patent No. 4,360,434, a thermal cure at elevated temperatures is used to complete a crosslinking reaction between the polymer coating and a crosslinking agent mixed into the coating solution. A similar approach is used in 4,767,645. In U.S. Patent Nos. 5,024,765 and 5,039,421 the coated membrane is immersed or exposed to a solution or a gas with a basic pH (e.g. pH 10 to 11) for 0.5 minutes to 48 hours, to complete in situ reactions. In these same last two patents heat treatment may be used to vary the pore size. The heat treatment may occur before or after the coating with the application of heat in the temperature range of 50°C to 150°C.

Other post treatments to charge the surface of the selective layer can be carried out if for example the coating is of one ionic charge, and I want a surface of a different ionic charge (to for example improve selectivity between multivalent ions and monovalent ions of the same sign,) or to improve fouling resistance (e.g. by graft polymerization, Acta Polym., 1998, 40: 570-578, and/or by coding and crosslinking hydrophilic polymers) or to make a bipolar membrane or a polar/hydrophobic membrane with unique selectivity properties. In this step, reagents with at least one reactive group which can react with the coating is applied, preferably from water or a gas phase.

The reagent also contains another group which is hydrophobic or polar or ionic depending on whether hydrophobic or polar or ionic groups are to be imparted to the surface. Such reagents are well known to those in the state of the art.

A list of reagents which may bind and impart ionic groups is given in U.S. Patent No. 4,659,474, and 4,778,596. Many of these reagents are based on reactive dyes, and diazines and triazine and quinoxaline compounds also containing ionic groups such as sulfonic. It is well known how to make similar compounds without the ionic groups, but with polar and hydrophobic groups and all of these may be used as a post treatment in the invention when surface treatment is needed. Other reactive groups which may be used to modify the membrane surface can be based on haloalkyl, aryl or benzyl, haloalkyl carboxylic or sulfonic or phosphonic acids. Or activated vinyl compounds containing ionic carboxylic or sulfonic groups. Other charging reagents may be reactive compounds with react with the groups on the crosslinked coating and with other groups which when hydrolyzed give an ionic pendent. For example chlorosulfonic acid or disulfonyl chlorobenzene. or haloacyl halides, di- or tri- acyl aromatic halides. Coatings containing electron rich aromatic groups (e.g. aryl groups substituted with -OH, -NH₂, -SH or alkyls) undergo electrophilic substitutions easily with sulfuric acid to form ionic sulfonic groups, and nitration to form polar nitro groups

In general terms, the conditions of applying the components of the membrane are such that a crosslinking reaction occurs in the stage of pressurizing the solution into the pores, and fixing the structure in place. In cases where trifunctional or polyfunctional molecules are involved at least two groups per molecule should react at this stage. Thus polyfunctional (including polymers) and trifunctional reactants may still contain unreacted groups. This is especially true in the case of molecules which have functional groups of different reactivity. For Example in halo triazines or pyrimidines there is a well known step reactivity were the halogens are displaced by nucleophiles at different conditions (e.g. temperature) (See Beech, "Fiber Reactive Dyes"). There are also many other reagents with step reactivity. In the invention it is often desirable to react all of the reactive groups to enhance further stability and in some cases selectivity. One simple and preferred mode is by heating the membranes on the surface or immersing the entire membrane in an oven or blowing hot air in the membrane, and especial on the surface. Or in another mode heating the membranes with a hot liquid, such as water or petroleum ether, or a perfluoro compound circulating over the surface. The pH of the solution or hot gas may also be adjusted to enhance reaction rates, which may be low for these last remaining functional groups. Similarly catalysts (e.g. tertiary amines, HF, ionic salts etc.) or initiators may be added to the hot liquid or gases. In addition to enhancing the reaction of additional reactive groups, the thermal treatment may be used to densify the pores of the membrane and thus increase rejection. The temperature and time of application of the thermal process is a function of the support material (e.g. nonwoven, asymmetric porous membrane, and if the heat treatment is carried out in a module then the temperature sensitivity of the module construction materials should be taken into account), and the temperature needed to complete the reaction. For most polymeric supports and organic components, reactions at elevated temperatures in the range of 40°C to 130°C may be used for duration's of 2 min to 24 hours. For high temperature polymeric materials like polysulfide, or PEEK temperatures in the range of 150 to 200°C may be used. There are also cases where the temperature of the coating and reaction under pressure occur at low temperatures (e.g. 0 to 10°C) and the heat treatment occurs at room temperature. For ceramic, inorganic and carbon membranes and modules heat treatment may be in the range of 100 to 1000°C, for times of 2 min to 24 hours. This heat treatment is preferably carried out at ambient pressures or optionally under pressure.

### Acid and base Treatments

Post-treatment of membranes with acids and bases, over a range of temperatures, to increase flux and or changing selectivity is a common process in the state of art. For example in U.S. Patent No. 3,581,331 (Cescon et al., 12/1970) and U.S. Patent No. 4,812,270 (Mar. 14, 1989, Cadotte, et al.) post treatments with hot mineral acid is used to increase membrane flux. Typically 10 to 85 weight percent acid in a temperature range of 50°C to 150°C. The preferred mineral acids are sulfuric and phosphoric acids. In U.S. Patent No. 4,326,958 the water flux of the composite membrane was improved by immersion the membrane in an aqueous solution of organic or inorganic acids and bases or a salt thereof. Some of the acids that may be used are sulfuric, hydrochloric, phosphoric, or chlorosulfonic. Exemplary bases are sodium hydroxide, barium hydroxide, ammonia, triethylamine, ethylenediamine and polyethyleneimine. All these methods can be used in the invention and are included by reference. There are of course cases in the invention when a post treatment by acids or/and bases is not needed. In these cases the combination of components, their concentration, and the conditions of reaction under pressure (pH temperature, time, etc.) are such that the desired flux and rejections are reached without the need for further steps.

### Additional coating under pressure or immersion

A second coating may be applied for the following reasons: 1) In the case of spirals and plate and frame devices it may be desirable to carry out the process of coating and filling under pressure twice. In the first application of reactants the none membranes surfaces will be saturated with absorbed material and in the second application the final membrane will be formed. 2) To improve anti-fouling properties. 3) To make a bipolar membrane. 4) To improve selectivity between monovalent and divalent ions of the same charge This second coating may be applied under pressure or by immersion. The materials and solvents and crosslinking agent may be taken from the above list. For example, in general they will not be exactly the same as the first layer. If the charge of the surface coating is to be opposite then reagents with an opposite charge must be introduced. If the surface coating is to be hydrophilic but non-charged on an ionic selective barrier then the reactants for the second coating must result in a hydrophilic none ionic coating.

In the following illustrative Examples, unless otherwise stated, flat supports are modified in a pressure flow cell with a rectangular surface area of 20 cm². The membranes are coated under pressure, either with or without flow, as stated. Measurements are carried out in the same cell under flow, using different solutes as described in the examples.

### Example 1

An asymmetric polysulfone ultrafiltration support of molecular weight cutoff of 80,000 is placed in the cell, which is then filled with a solution of 0.025% polyethyleneimine(PEI), MW 30,000 and 0.0125% tetrachloro-pyrimidine, pH 10.5, under ambient conditions. A pressure of 10 atm pressure is applied, and 5 ml of solution are collected. The membrane is then placed first in an oven at 85°C for 30 minutes and then in 40% phosphoric acid or sulfuric acid at 90°C for 4 hours as in the procedure of Cadotte (U.S. Patent No. 4,812,270), and is finally washed. The thus-prepared membrane was tested with 6% sucrose and gave 98+% rejection with a water flux of 1200 liters/m²/day (lmd), at 25 bars under flow and showed good acid and base stability. The rejection to a 0.2% sodium chloride solution was 45%.

### Reference Example

In U.S. Patent No. 4,659,474, there is negligible penetration into the membrane's pores of the polymer applied under pressure, virtually only a surface coating being formed in that case. By contrast, in the present invention there is penetration into the pores of the polymer applied under pressure. To demonstrate this distinction, the rejection of the membrane to the polyethyleneimine was checked both for the base membrane used in Example 1, above, and for the base membrane used in Example 1 of US 4,659,474. In Example 1 of US 4,659,474 the substrate used for the application of PEI under pressure was made by taking a UF membrane and applying to it a sequence of steps described in that Example. As described in the specification of that patent, the objective of this sequence of steps is to reduce pore penetration of the polymer applied under pressure. Both substrates were tested for rejection to polyethyleneimine 30,000 under 10 atm pressure. The substrate from Example 1 of the present invention had only a 80% rejection to the polymer, indicating pore penetration. The prepared substrate of Example 1 of US 4,659,474 had 98+% rejection, indicating no pore penetration and only a surface coating. All the examples of the U.S, Patent are designed to have little pore penetration of the polymer applied under pressure.

### Example 2

Example 1 was repeated with 0.0125% polyethyleneimine and 0.006% tetrachloropyrimidine. The results showed 98+% rejection to sucrose and a water flux of 1500 lmd, with good acid and base stability.

If a one cm scratch is made with a No. 19 needle in the final membrane the rejection to sucrose falls below 90%, but if the process reapplied the original performance of the membrane is achieved, indicating that the process of making the membranes also seals the imperfections.

### Example 3

Example 1 was repeated with 0.006% polyethyleneimine and 0.003% tetrachloropyrimidine. The results showed 98+% rejection to sucrose and a water flux of 2000 lmd, with good acid and base stability. If 0.003% polyethyleneimine is used with0.0.0015% of tetrachloropyrimidine and the heating step is at 95°C. then the acid treatment step can be.eliminated and the membrane still has a water flux of 1200 lmd and a sucrose rejection of 95+%.

Examples 1, 2 and 3 show that the flux can be changed by reducing the amount of material pressed into the membrane without affecting the rejection.

### Example 4

Example 1 was repeated with cyanuric chloride instead of tetrachloro-pyrimidine and the solution being at 4°C to 8°C with a pH of 7.0. Prior to placing the membrane in the oven it was immersed in alkali at pH 10 for 10 minutes. The resultant membrane had 97% rejection to sucrose and a water flux of 1100 lmd.

### Example 5

Example 4 was repeated without the pressure step. The membrane was instead immersed in the polyethyleneimine solution for 10 minutes. The rejection of the membrane was 40% to sucrose with a water flux of 2200 lmd. This Example, compared with Example 4, shows the importance of applying the components under pressure to get high rejections.

### Example 6

Example 4 was repeated, but decreasing the concentration of cyanuric chloride from 0.0125% to 0.006%. The final membrane had a rejection of 90% to sucrose and a flux of 1850 lmd. This Example, compared with Example 4, shows how the flux and rejection can be controlled by changing the ratio of the different components.

### Example 7

Example 1 was repeated using 0.2% of a novalak epoxy dispersion stabilized with sodium dodecyl sulfate in place of cyanuric chloride. The resultant membrane had a 85% rejection to sucrose and a 99+% rejection to congo red.

### Example 8

Example 1 was repeated using tetraethylene pentaamine instead of polyethyleneimine, and the UF membrane with a molecular weight cutoff of 50,000. The resultant membrane had a 95% rejection to sucrose and a flux of 1980 lmd.

### Example 9

Example 2 was repeated using an asymmetric polyethersulfone support with a molecular weight cut-off of 50,000. The flux and rejection of the final membrane are 99% to sucrose and a water flux of 2300 lmd.

### Example 10

Example 1 was repeated using an asymmetric polyvinylidene fluoride support with a molecular weight cut-off of 100,000. The final membrane had a flux and rejection of 94% to sucrose and a water flux of 2700 lmd.

The Example was repeated using a UF asymmetric support based on an alumina porous base coated with TiO2. The resulting membrane has a flux of 1700 lmd and a 98% rejection to sucrose. These results show that the invention can utilize different supports which can be inorganic or organic.

### Example 11

Example 1 was repeated by heating to 110°C for 30 minutes instead of 80°C. The resultant membranes had a sodium chloride rejection of 85%. When the amount of tetrachlorpyrimidine was increased to 0.02%, the rejection to sodium chloride was more than 95%. This Example shows that by adjusting the temperature and/or the concentration of crosslinker, NF or RO membranes can be made. If the quantity of tetrachloropyrimidine is reduced to 0.003%, the membrane has only 50% rejection to sucrose, indicating that an open NF membrane has been made. This result demonstrates the versatility of the invention.

### Example 12

A polysulfone asymmetric support is coated under 5 bar pressure with an solution containing 0.02% polyvinylphenol and 0.008% bis(hydroxymethyl) phenol at pH 12, permeating through the membrane 5 ml of solution The membrane is immersed in sulfuric acid at pH 1.0, then removed and heated at 110°C for 15 minutes The resulting membrane was treated with acid and washed and gave 93% rejection to NaCl, with a water flux of 1300 lmd at 30 bars. This membrane has good stability to acids, bases and oxidants.

When this Example is repeated using hydroxymethyl polysulfone (degree of substitution of 1.5 meq/g) instead of polyvinylphenol and formaldehyde instead of bis(hydroxymethyl)phenol giving similar results.

### Example 13

A tubular membrane made from Ciba Geigy polyimide, with a molecular weight cut-off of 10,000 was treated with a hexane solution containing hydroxy- terminated polydimethylsiloxane (TEOS), and tin octoate with traces of water dispersed in the solution. After 10 ml of solvent was passed through the membrane, it was removed and left to try for 24 hours under ambient conditions. The resulting membrane was tested in a pervaporation system having a vacuum of 25 mm Hg on the permeate side with a 2% ethanol solution in water on the feed side. The permeate had an ethanol concentration of 35% with a permeate flux of 250 Kg/m²/d. This shows that the invention can be used to make pervaporation membranes.

The above was repeated using an inorganic UF membrane based on alumina coated with TiO2. The results were similar to the pervaporation membrane made with an organic polymer and show that both organic and inorganic membranes can be utilized.

### Example 14.

An asymmetric polysulfone UF membrane with a 50,000 MW cut-off is treated with a 0.005% resole solution at pH 1.0 (based on sulfuric acid). After passing 10 ml of solution the membrane was drained and heated at 95°C for 10 minutes and treated with acid as in Example 1. The membrane gave 97% rejection to NaCI and 99% to sucrose with a water flux of 900 Imd.

### Example 15

Example 13 was repeated and the product was tested as a gas separation membrane using air on the feed side with a pressure of 10 atm. The permeate had an O₂ concentration of 35%, compared with 20% in the feed. This shows that the invention can be used to make gas separation membranes.

### Example 16

UF Polyethersulfone tubelets from X-Flow were treated on the dense side with an aqueous enzyme solution containing 0.05% subtilisin and 0.001 % butanediol diglycidyl ether at 5 bars. After passing 10 ml solution, the tubelets were immersed in pH 7.5 for ten minutes and then allowed to dry for 60 minutes under ambient conditions. The membrane, when tested with MgCl₂ had 95% rejection, showing that they were NF membranes. When tested with a protein, the permeate contained the hydrolyzed amino acids indicating that the membrane was catalytically active.

### Example 17

An asymmetric alumina membrane was treated with a solution of 0.03% polystyrene copolymer with ligands which have bound rhodium catalysts (the polymer also contained amino functions), together with 0.003% tetrachloropyrimidine in THF at 2 bars. 20 ml of solution /10cm were collected. The membrane was drained and heated in a nitrogen environment for 2 hrs. The membrane showed catalytic activity in reducing toluene to cyclic aliphatics.

### Example 18

A polysulfone asymmetric UF membrane with a MWCO of 80,000 is treated at 2 bars with an aqueous solution containing 0.01% vinyl sulfonic acid, 0.05% hydroxyethylacrylate. 0.001 % ethylene glycol dimethacrylate, and 0.03% FeSO₄/ ammonium persulfate. After passing 30 ml/10 cm of solution the membrane was removed drained and heated for 20 min at 80°C. The resultant membrane had a 90% rejection to NaCl and a water flux of 780 lmd. The membrane could also be used in an ED experiment as the cation exchange membrane.

### Example 19

A polyvinylidene asymmetric UF membrane with a MWCO of 100,000 is treated at 2 bars/60°C with a toluene solution containing 0.01 % chloromethylated styrene, 0.05% styrene, 0.001% divinylbenzene, and 0.002% AIBN. After passing 15 ml/10 cm of solution the membrane was removed drained and heated for 60 min at 80°C. The resultant membrane was treated with 10% trimethylamine in ethanol for 24 hours to form a quaternized membrane which had a 85% rejection to sucrose and could also be used in an ED experiment as the anion exchange membrane.

If instead of reacting the membrane with trimethylamine, the membrane is treated with a 85% sulfuric acid solution, the aromatic rings are sulfonated and an anionic membrane is produced. This membrane has 99% rejection to sucrose and makes an excellent cation exchange membrane in both ED and dialysis experiments.

### Example 20

Example 1 is repeated using a five generation poly(propyleneimine) dendrimer (known commercially as DSM ASTRAMOL^{™}), containing 64-amine terminated groups (see p 84 of Polymeric Materials Science and Engineering, Vol. 77, Fall 1997, Las Vegas) instead of the polyethyleneimine. The resulting membrane had 94% rejection to sucrose.

### Example 21

Example 1 is repeated on the same type of UF base membrane with macroscopic pin holes and scratches on the surface of the support. To use this support, 100 ppm of novalak epoxy particles of 0.1 to 1 micron stabilized with sodium lauryl sulfate are added to the coating solution of polyethyleneimine and tetrachlorpyrimidine. The role of the novalak epoxy particles is to repair the macroscopic imperfections. The resulting membrane had similar rejection and flux characteristics as the membrane in Example 1.

### ADVANTAGES OF THE INVENTION

In general terms, the present invention makes available, e.g., acid and base stable RO, NF and tight UF membranes, and by selection of reactants stability to oxidants can be imparted, and (if made on solvent-stable base membranes) solvent stable membranes may be made, The present process effects additionally sealing of imperfections in membranes, and thickness of the selective barrier can be controlled by reactant concentration, pressure and time, so that, e.g., a selective film thickness of 0.3 micron can be readily made with any imperfections also being sealed. The present membranes can be readily adapted or specially prepared for purposes of ED, pervaporation, gas separation, and catalytic membranes based on a polymeric barrier with RO or NF or UF selectivity plus catalytic activity may be prepared. The invention can be applied to inorganic and ceramic and metallic, as well as polymeric base membrane supports, and the selective barrier may be inorganic, ceramic or metallic. In more detail, the benefits of the present invention over the existing art may be seen more readily from the following description.

In one aspect, my approach is a self-sealing approach to forming membranes. By applying a membrane forming solution under pressure, the ingredients react when being concentrated one layer forms and its structure if imperfect because of areas of low density is fixed as the crosslinking reaction occurs. Imperfections in this layer are immediately filled because of the high flux through these holes. As the holes are filled crosslinking occurs and fixes the structure. In the existing art approach to forming NF and RO membranes, post-coating steps are often necessary to repair imperfections caused by deviations in the procedure or lack of uniformity in the support. In my approach, both the membranes and the repairs may be made simultaneously.

Most NF and RO membranes are made by coating a solution of monomer and /or polymer onto an asymmetric membrane, draining or washing, then reacting the residual layer with another solution or gas to initiate polymerization or crosslinking, which results in a crosslinked selective barrier. Because the reactants of the second solution must diffuse into the coating of the first, there is a gradient of crosslinks from the interface of the coating and the second solution. This often leaves the lower part of the first layer incompletely crosslinked, and minimal or no crosslinked structures within the pores of the support themselves. To increase the stability of these coatings, subsequent steps are carried out which crosslink the coating (e.g. heating to condense different components), or additional crosslinkers are added to the first coating solution and these crosslinkers are activated by heat (for example) after the second solution is applied with the other crosslinkers. This results in a selective layer crosslinked in the upper most part by the crosslinker that gives the membrane its selectivity and stability, and a second under layer crosslinked predominantly with the second crosslinker having less selectivity and often less stability.

In the present invention, the reactants of the selective coating are intimately mixed in the coating solution, so that the selective layer is crosslinked throughout its thickness by the same crosslinks. In addition, the upper pores of the support are filled by a mixture containing all the components. The advantages are: less steps in the manufacture, improved stability and selectivity, self sealing of imperfections and control over the uniformity of the selective barrier.

There is also existing art, in which membranes are made by coating a mixture onto the support, draining/and or washing, and then curing and crosslinking in a subsequent step such as heating. Thin layers are difficult to achieve by this approach and often multiple coatings and/or thick layers are used to get selectivity at the expense of flux. There is desirably no reaction in the coating process and crosslinking only occurs in the subsequent steps. This prior art separation of crosslinking from the coating step also results in imperfections because draining, washing, drying and curing steps have different effects on local coating density due to variations in the underlying porous structures, gravity effects and heat gradients. In the present invention. coating and crosslinking occur simultaneously, giving a coating less sensitive to these effects and a selective barrier with much fewer imperfections. By forcing the coating onto the support, and especially into the pores of the support, the reactants are concentrated and are forced to interact in a dense state, while pressure is still being applied, and this improves both selectivity and stability.

There exists art on which mixtures are applied under a pressure differential such as a positive pressure or under a vacuum. In none of these cases does simultaneous crosslinking and/or forming occur inside the upper pores of a support with a mixture of reactants applied under conditions such that crosslinking will occur under pressure and upon concentration inside the pores. The pressure is needed to keep the reactants in place against diffusive forces and the concentration is needed to effect the reaction, and moreover, both are needed to achieve a final composite membrane with good selectivity and stability.

For example, in US 4,659,474 (Apr. 21, 1987), NF membranes are made in a rather complicated process with the goal of making high flux membranes by a mechanism of concentration polarization only on the surface of the membrane. The important point in this patent is that the polymer be highly rejected so that it forms a polarizing layer. To achieve a thin polarizing layer a dilute polymer solution is applied under pressure to form a thin film, so that there is no penetration of polymer into the support's pores, because then the film would no longer be thin, flux would be lowered (see col. 2, lines 22 to 28, and because the coating is thin and only on the surface, it must be bound to the support otherwise it would not be stable.

In one case, a mixture of a reactive polymer (e.g., PEI) and a polyfunctional agent (e.g., cyanuric chloride) are mixed together and applied under pressure to a support which contains reactive groups for the polyfunctional reagent. The purpose of the polyfunctional reagent is to bind the polymer to the support and to increase the molecular weight of the polymer such that there is no penetration of the coating into the pores of the support (see col. 3, lines 35 to 40, cols. 9 and 10, lines 54 to 68 and 1 to 3). The use of pressure and dilute solution is to allow a thin film to be deposited on the surface (see cols. 1 and 2 lines 66 to 68 and 1 to 2). The polyfunctional reagent can also crosslink this layer (see col. 3, lines 1 to 19 and lines 49 to 56). It is also stated, that in all cases an additional crosslinking step is needed (col. 10, lines 1 to 3) beyond the crosslinker in solution, to achieve the required selectivity, and in all examples an additional crosslinking step is added after the concentration polymerization step. It is also stated that for supports containing reactive groups, the solution need not contain a polyfunctional reagent, though it may be desirable to add the polyfunctional reagent to increase the molecular weight of the polymer (increasing its rejection and penetration into the pores, see col. 9 lines 64 to 68). In all examples a high molecular weight polymer is used as the coating material on supports which have low molecular weight cut-offs, which ensures a polymer film only on the surface with no pore penetration.

In the present invention, it has been found that binding to the support is not necessary and a second cross-linking step is also not needed to achieve both stability and rejection, as I discovered when the reactants in a dilute solution are pressed into the pores of the upper layer of the support, under the conditions that as they concentrate in the pores, they react with each other inside the pores. This approach is much simpler than that of US 4,659,474, because it needs fewer steps, can achieve higher rejections, and has improved stability. Also the present approach is more general, since low molecular material can be used in addition to polymers. In addition, any porous asymmetric structure can be used by my present invention, because functional groups on the support are not necessary. This last feature is important as many of the most stable supports are stable because they have no reactive groups, and in the existing art a significant synthetic effort must be put into introducing such groups.

In my present invention the coating material inside the pores acts as the selective barrier and may in addition anchor a thin surface coating layer to which it is an integral part as it is an extension of the same material deposited first into the pores and then as the pores are filled onto the surface. This is different from US 4,659,474, where only the surface coating is the selective barrier, but by contrast in the present invention, the pore filled portion and coating together form the selective barrier. Without the material in the pores, both the stability and selectivity would be significantly reduced.

In the present invention, pores are equally blocked because a chemical reaction occurs which forms a shaped filling of the pores that has the desired permeability. Thus, a support containing a range of different pore sizes (which it always does) or supports with large or small or intermediate sized pores can be used. In addition, because of the shaped fit into the pores and covalent bonding, the membranes are stable for thousands of hours. The term dynamic membranes in the prior art infers the constant reapplication of the selective barrier. In the present invention, the selective layer is applied once and lasts for the life time of the membrane. In my invention also. the selective layer is not more than 10 microns thick and preferably less than 1 micron thick. If my invention is used for dialysis it would have much higher exchange rate than the membranes described in Rembaum's patents because the selective layer is much thinner.

In the present invention, it is the combination of applying pressure and reacting while concentrating in the pores (or additionally at the surface), that molds the reactants to the correct shape of each pore and surface contour for the desired selectivity in a thin layer. Further, the deposited thin layer material in the pores (and optionally also on the surface) controls selectivity, rather than the material of the support as e.g. is claimed by Ward, et al. for his particular case of pore penetration.

The present invention is highly efficient in making membranes of desired selectivity, because the process has few steps, i.e. the membrane or latent membrane is formed in one step, intermediate washing steps are generally not needed, and it uses very low concentrations of materials. By varying reactant concentration, different types of membranes can be formed (e.g. RO, NF, tight UF, ED, pervaporation or dialysis).

In the present invention, it has surprisingly been found that (e.g.) by combining the reactants (which may be a polymer and crosslinker) in very dilute solution where the conditions of temperature, pH, and catalyst concentration are such that crosslinking does not occur appreciably in solution, because of its dilution, but is increased and occurs upon concentrating the components in the uppermost layer of a porous support, both selectivity and chemical stability can be controlled by adjusting the ratio of the crosslinker(s) in the solution to the other reactive ingredients. Besides being simpler and generating less production waste, my process affords longer life, together with selectivity, and is versatile in providing a broad range of membranes.

A benefit of my approach is that more uniform and stable selective barriers are formed. In addition, in contrast to the prior art generally, I utilize very dilute solutions to form uniform coatings, e.g. generally less than 0.1 %, and still get uniform membranes, I can apply mixtures of very reactive compounds together, without destabilizing the solution, which could not be done generally in the known art.

In the present invention, the approach is much simpler and requires less restrictions on the support or reactive components than is the case in the known art. In addition, while my invention is applied to asymmetric supports, the reactions that occur in these supports is essentially that of crosslinking, rather than precipitation; if precipitation occurs it will be in combination with a covalent crosslinking reaction. Crosslinking is needed because for this purpose reactants are available which give cured structures that are significantly more stable than, e.g., precipitated inorganics.

In the present invention, by forcing a solution of both enzyme and crosslinker together under pressure and inducing reaction in the pores, UF, or NF or RO membranes can be formed, and these membranes will have selectivities as well as enzyme activities Thus, when such composite membranes are in use, only substrates for catalysis which pass through the membranes will be in contact with the catalytic sites and this will increase the efficiency of catalytic conversion. By controlling the pore size of the catalytic layer, the molecules that will pass through will be controlled, and in that way membranes can be designed for a given substrate. In addition, by controlling the pore size membranes can be made which will not allow medium to pass through, but after a surface catalytic conversion the low molecular weight material will permeate through. In addition, the invention can also apply to solvent stable supports so that the enzyme selective barriers can be used can be used in organic solvents and find application in the growing field of organic synthesis, especially were chiral reactions are needed and for carrying out synthesis in fewer steps than in the many steps required by traditional synthetic organic chemistry.

In the present invention, the selective barrier is formed inside the small upper most pores of an asymmetric base membrane. The pores of the membrane act as microscopic reaction vessels and the selective barrier forms as a result of the reaction between the components within this space. The components of the solution may also react with the walls of the support in addition to reacting with each other. By placing a thin selective barrier with uniform crosslinks inside the pores, good selectivity and stability are achieved.

As aforementioned, in the present invention, process conditions are chosen such that as the selective barrier is formed, while imperfections are simultaneously filled. Relatively imperfection-free selective coatings are formed because imperfections are characterized by open pore structures and when the solution containing the chemicals which form the selective barrier are applied under pressure they flow through open pores with higher fluxes, and through these areas there is a greater flow of material. This greater flow of material forms a thick and/or dense plug in the imperfection which then has a low permeability. The lower flow of material through the intact surfaces forms a thinner membrane, with the desired flux rejection characteristics. Thus, better selective and imperfection free membranes are formed.

While particular embodiments of the invention have been particularly described herein, it will be appreciated that the present invention is not limited thereto, since as will be readily apparent to skilled persons, many modifications or variations can be made. Such modifications or variations which have not been detailed herein are deemed to be obvious equivalents of the present invention.

## Claims

1. A process for preparing a selective composite membrane from an asymmetric base membrane, which includes at least components (a) and (c) of the following components (a), (b) and (c): (a) a thin upper layer with relatively smaller pores; (b) an intermediate layer situated between layers (a) and (c) and having pore sizes intermediate those of layers (a) and (c); (c) a lower layer, thicker than layer (a), with relatively larger pores than in layer (a), which process comprises synthetically impregnating at least some pores of layer (a) with a filling material comprising an ordered macromolecular structure, said synthetic impregnation comprising forcing a solution containing all reactants into said pores of layer (a) accompanied by applying superatmospheric pressure to the surface of layer (a) or a vacuum to the surface of layer (c), or both said superatmospheric pressure and said vacuum, said reactants being at least one member selected from the group consisting of polymers, oligomers, monomers, and/or low molecular weight polyfunctional reagents, wherein the concentration of said reactants in said solution and the pressure difference between the surface of layer (a) and the surface of layer (c) being such that, while no significant reaction takes place in the solution prior to said forcing, chemical interaction of said reactants is initiated in pores of layer (a) as microreaction vessels and progresses within said pores of layer (a), said chemical interaction of said reactants being quenched at any desired stage, and wherein both said base asymmetric membrane and said ordered macromolecular structure are independently selected from organic materials, inorganic materials and mixtures thereof.

2. The process of claim 1 further including at least one of the following features (i), (ii) and (iii) wherein in:
(i) a subsequent heating step is effected to complete the formation of said ordered macromolecular structure;
(ii) at least one reactant is initially absorbed onto the walls of the pores in layer (a); and
(iii) said reactants are applied together with at least one further ingredient selected from inert polymers and submicronic particles, to which additional ingredient pores of layer (a) are permeable.

## Patentansprüche

1. Verfahren zur Herstellung einer selektiven Verbundmembran aus einer asymmetrischen Basismembran, umfassend wenigstens die Komponenten (a) und (c) der folgenden Komponenten (a), (b) und (c): (a) eine dünne obere Lage mit relativ kleineren Poren; (b) eine Zwischenlage, die zwischen den Lagen (a) und (c) liegt und Poren mit einer Größe zwischen denen der Lagen (a) und (c) aufweist; (c) eine untere Lage, die dicker als die Lage (a) ist, mit relativ größeren Poren als in der Lage (a), wobei das Verfahren das synthetische Imprägnieren von wenigstens einigen Poren der Lage (a) mit einem Füllmaterial beinhaltet, das eine geordnete Makromolekülstruktur aufweist, wobei das genannte synthetische Imprägnieren das Drängen einer Lösung, die alle Reaktanten enthält, in die genannten Poren der Lage (a) beinhaltet und gleichzeitig die Oberfläche der Lage (a) mit Überdruck oder die Oberfläche der Lage (c) mit Vakuum beaufschlagt wird oder sowohl der genannte Überdruck als auch der genannte Unterdruck beaufschlagt werden, wobei die genannten Reaktanten wenigstens aus einem Element bestehen, das aus der Gruppe bestehend aus Polymeren, Oligomeren, Monomeren und/oder polyfunktionellen Reagenzien geringer relativer Molekülmasse ausgewählt wird, wobei die Konzentration der genannten Reaktanten in der genannten Lösung und die Druckdifferenz zwischen der Oberfläche der Lage (a) und der Oberfläche der Lage (c) derart sind, dass, während keine bedeutende Reaktion in der Lösung vor dem genannten Drängen stattfindet, die chemische Interaktion der genannten Reaktanten in Poren der Lage (a) als Mikroreaktionsgefäße ausgelöst wird und in den genannten Poren der Lage (a) fortschreitet, wobei die genannte chemische Interaktion der genannten Reaktanten in jedem beliebigen gewünschten Stadium gequencht wird und wobei sowohl die genannte asymmetrische Basismembran als auch die genannte geordnete Makromolekülstruktur unabhängig aus organischen Materialien, anorganischen Materialien und Gemischen davon ausgewählt werden.

2. Verfahren nach Anspruch 1, das ferner wenigstens eines der folgenden Merkmale (i), (ii) und (iii) beinhaltet, wobei:
(i) ein folgender Erwärmungsschritt durchgeführt wird, um die Bildung der genannten geordneten Makromolekülstruktur abzuschließen;
(ii) wenigstens ein Reaktant anfänglich auf den Wänden der Poren in Lage (a) absorbiert wird; und
(iii) die genannten Reaktanten zusammen mit wenigstens einem weiteren Bestandteil verwendet werden, der aus inerten Polymeren und submikronischen Partikeln ausgewählt wird, wobei die Poren der Lage (a) für den zusätzlichen Bestandteil durchlässig sind.

## Revendications

1. Procédé de préparation d'une membrane composite sélective à partir d'une membrane de base asymétrique, qui comprend au moins des composants (a) et (c) des composants (a), (b) et (c) suivants : (a) une mince couche supérieure avec des pores relativement petits; (b) une couche intermédiaire située entre des couches (a) et (c) ayant une grosseur de pores intermédiaire à celle des couches (a) et (c); (c) une couche inférieure plus épaisse que la couche (a) avec des pores relativement plus gros que dans la couche (a), lequel procédé comprend imprégner de manière synthétique au moins certains des pores de la couche (a) avec une matière de remplissage comprenant une structure macromoléculaire ordonnée, ladite imprégnation synthétique comprenant forcer une solution contenant tous les réactants dans lesdits pores de la couche (a) en appliquant une pression superatmosphérique à la surface de la couche (a) ou un vide à la surface de la couche (c), ou bien ladite pression superatmosphérique et ledit vide, lesdits réactants étant au moins un membre sélectionné parmi le groupe consistant en polymères, oligomères, monomères et/ou réactifs polyfonctionnels de faible poids moléculaire, où la concentration desdits réactants dans ladite solution et la différence de pression entre la surface de la couche (a) et la surface de la couche (c) étant telles que, alors qu'aucune réaction significative n'a lieu dans la solution préalablement audit forcement, une interaction chimique desdits composants est déclenchée dans les pores de la couche (a) en tant que vases de microréaction et progresse dans lesdits pores de la couche (a), ladite interaction chimique desdits réactants étant arrêtée brusquement à tout stade désiré, et où ladite membrane de base asymétrique et ladite structure macromoléculaire ordonnée sont indépendamment sélectionnées parmi des matières organiques, des matières inorganiques et des mélanges de celles-ci.

2. Le procédé de la revendication 1, comprenant en outre au moins l'une des caractéristiques (i), (ii) et (iii) suivantes où :
(i) une étape de chauffage subséquente est effectuée pour achever la formation de ladite structure macromoléculaire ordonnée;
(ii) un réactant au moins est absorbé initialement dans les parois des pores dans la couche (a); et
(iii) lesdits réactants sont appliqués ensemble avec au moins un ingrédient supplémentaire sélectionné parmi des polymères inertes et des particules submicroniques, ingrédient supplémentaire auquel les pores de la couche (a) sont perméables.
